(19)

Europäisches
Patentamt
European
Patent Office
Office européen
des brevets

(11) **EP 4 484 009 A1**

(12) **EUROPEAN PATENT APPLICATION**

(43) Date of publication:
  **01.01.2025  Bulletin 2025/01**

(21) Application number: **24183605.5**

(22) Date of filing: **21.06.2024**

(51) International Patent Classification (IPC):
  **B01L 3/00** *(2006.01)*    **B01L 9/00** *(2006.01)*

(52) Cooperative Patent Classification (CPC):
  **B01L 3/502753; B01L 9/527;** B01L 2200/0636;
  B01L 2200/0652; B01L 2200/0673;
  B01L 2300/0681; B01L 2300/0816;
  B01L 2300/0864; B01L 2300/0887; B01L 2400/0487

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(30) Priority:  **23.06.2023  JP 2023103519**

(71) Applicant: **SYSMEX CORPORATION
  Kobe-shi
  Hyogo 651-0073 (JP)**

(72) Inventors:
  • **AJIRI, Taiga
    Kobe-shi, Hyogo, 651-0073 (JP)**
  • **SHIRAI, Kentaro
    Kobe-shi, Hyogo, 651-0073 (JP)**
  • **FUJIYAMA, Shingo
    Kobe-shi, Hyogo, 651-0073 (JP)**
  • **OBINATA, Hiroyuki
    Kobe-shi, Hyogo, 651-0073 (JP)**
  • **MAEDA, Natsuki
    Kobe-shi, Hyogo, 651-0073 (JP)**

(74) Representative: **Hoffmann Eitle
  Patent- und Rechtsanwälte PartmbB
  Arabellastraße 30
  81925 München (DE)**

(54)  **PARTICLE SEPARATION CHIP AND PARTICLE SEPARATION APPARATUS**

(57)  A particle separation chip 1 for separating particles contained in a specimen based on the size of the particles includes an upper substrate 10 and a lower substrate 20 having a micro flow path 1a inside and a perforated sheet 30 with holes. The micro flow path 1a has a main flow path 100 having an inlet 101 at the upstream side into which a first specimen containing first particles and second particles that are smaller than the first particles are supplied, and an outlet 104 at the downstream side into which a second specimen containing mainly first particles is discharged, one flow path 200, which is connected to the main flow path 100 at branches along the flow direction of the main flow path 100 and has an outlet 213 from which a third specimen containing the second particle is discharged at the downstream side. At the branches, the main flow path 100 and the branch flow path 200 are connected via holes in the perforated sheet 30.

FIG.5

EP 4 484 009 A1

**Description**

TECHNICAL FIELD

The present invention relates to a particle separation chip and a particle separation apparatus.

BACKGROUND

] In recent years, various methods of particle separation using micro flow path have been developed. For example, the following non-patent document 1 discloses a particle separation method using hydrodynamic filtration. In the separation method, a micro flow path consisting of a main flow path and a plurality of branch flow paths branched from the main flow path is used. A specimen is introduced into the main flow path , and particles are separated between the main flow path and the branch flow path based on the size of the particles. According to the separation method, damage to the particles due to separation is minimal and the structure of the flow path may be simplified.

"Classification of Blood Cells Using Hydrodynamic Filtration," Miyuki Matsuda, and 2 others, Journal of Electrical Engineering E, Institute of Electrical Engineers, 2008, Vol. 128, No. 10, page. 396 to 401 (Non-Patent Document 1) is an example of a related art.

SUMMARY

The micro flow path using the Hydrodynamic Filtration described above may be usable at the laboratory level. However, they do not satisfy the high specimen processing ability (throughput) required at the practical level, e.g., in product development and clinical settings.

In view of these issues, the purpose of the present invention is to provide a particle separation chip and a particle separation apparatus that may demonstrate sufficient specimen processing capacity (throughput) at product development sites and clinical sites.

A particle separation chip (1, CP1 to CP5, CP11 to CP16) according to the present invention includes a substrate (10, 20) having a micro flow path (1a) inside, and a perforated sheet (30) with a plurality of holes (31). The micro flow path (1a) includes a main flow path (100) having an inlet (101) at the upstream side into which a specimen containing first particles and second particles smaller than the first particles is supplied, and a first outlet (104) at the downstream side from which a specimen containing mainly first particles is extracted, and includes a branch flow path (200) which is connected to the main flow path (100) at a plurality of branches (B) along the flow direction of the main flow path (100), having a second outlet (213) from which a specimen containing a second particle is extracted on the downstream side. At the plurality of branches (B), the main flow path (100) and the branch flow path (200) are connected via holes (31) in the perforated sheets (30, PS1 to PS7).

According to the particle separation chip of the present invention, the main flow path and the branch flow path are connected through holes in the perforated sheet at multiple branches (B). This enables sufficient specimen processing capacity (throughput) at product development sites and clinical sites.

The particle separation apparatus (2) comprises a particle separation chip (1, CP1 to CP5, CP11 to CP16) of the above invention, a setting part (41) on which the particle separation chip (1, CP1 to CP5, CP11 to CP16) is placed, a liquid pumping section (61 to 63) for inserting the specimen and sheath liquid respectively into a specimen inlet (101) at the particle separation chip (1, CP1 to CP5, CP11 to CP16) and sheath liquid inlet (102, 103) , a first collection section (64) for the first particles connected to the first outlet (104), a second collection section (65) for the second particles connected to the second outlet (213).

According to the particle separation apparatus, the particle separation chip is placed on the setting part, and the liquid pumping section is driven to insert the first specimen and sheath liquid. This allows smooth collection of the first and second particles from the first and second collection sections, respectively.

EFFECTS OF THE INVENTION

According to the present invention, it is possible to provide a particle separation chip and a particle separation apparatus that may demonstrate sufficient specimen processing capacity (throughput) at product development sites and clinical sites.

BRIEF DESCRIPTION OF DRAWINGS

FIG. 1 is a schematic diagram illustrating an upper board.

FIG. 2 is a schematic diagram illustrating a lower board.

FIG. 3 is a schematic and enlarged diagram illustrating a view of a perforated sheet.

FIG. 4 is a schematic diagram illustrating an assembly of an upper substrate, lower substrate, and perforated sheet.

FIG. 5 is a schematic diagram illustrating a particle separation chip.

FIG. 6 is a schematic diagram illustrating an injection of specimen and sheath liquid into the inlet of the particle separation chip and the pouring out of specimen from the outlet.

FIG. 7 is a schematic diagram illustrating a range of flow of a first specimen, which is restricted by a sheath liquid.

FIG. 8 is a schematic diagram illustrating a range of flow of a first specimen, which is restricted by the sheath liquid.

FIG. 9 is a schematic diagram illustrating a vicinity of an intersection of a flow path of a main flow path and a flow path of a branch flow path.

FIG. 10 is a schematic diagram illustrating a separation of a first and second particles at a branch.

FIG. 11 is a schematic diagram illustrating an enlarged view of a vicinity of one of a branch flow paths.

FIG. 12 is a schematic diagram illustrating a configuration of a particle separation apparatus.

FIG. 13 is a block diagram illustrating a functional structure of a cell detection system.

FIG. 14 is a schematic diagram illustrating sizes of a main and branch flow paths.

FIG. 15 is a schematic diagram illustrating an arrangement and size of holes in a perforated sheet.

FIG. 16 is a table showing a configuration of four types of chips according to one or more embodiments.

FIG. 17 is a table showing a configuration of seven types of perforated sheets according to one or more embodiments.

FIG. 18 is a schematic diagram illustrating a plan view of four types of chips.

FIG. 19 is a table showing a configuration of four types of particle separation chips and three types of first specimens according to the first example.

FIG. 20 is a graph of a red blood cell removal rate and white blood cell removal rate of four different particle separation chips according to the first example.

FIG. 21 is a table showing a configuration of a particle separation chip and a first specimen according to the second example.

FIG. 22 is a graph of a red blood cell removal rate, white blood cell removal rate, and A549 cell collection rate of a particle separation chip according to the second example.

FIG. 23 is a table showing a configuration of six different particle separation chips and a composition of a first specimen according to a third example.

FIG. 24 is a graph of a particle diameter distribution of Jurkat and A549 cells in a first specimen according to the third example.

FIG. 25 is a graph of a removal rate of Jurkat cells and a collection rate of A549 cells for six different particle separation chips, according to the third example.

FIG. 26 is a graph of a flow rate to each outlet of six different particle separation chips according to the third example.

FIG. 27 is a graph of a collection rate for each particle diameter of six different particle separation chips according to the third example.

FIG. 28 is a schematic diagram illustrating a configuration of a main flow path and a branch flow path for a simulation of a discharge into a branch flow path, and a graph showing a results of a percentage of specimens discharged into a branch flow path.

FIG. 29 is a schematic diagram illustrating a configuration of a branch flow path according to a modified example of a branch flow path.

FIG. 30 is a diagram illustrating a plan view of a configuration in a vicinity of a branch flow path according to a modified example of a branch flow path.

DETAILED DESCRIPTION

The following embodiments apply the present invention to a particle separation chip and a particle separation apparatus for separating a plurality of particles in a liquid specimen based on the size of the particles. In the following embodiment, the particle separation chip separates a liquid specimen (first specimen) containing a first particle and a second particle smaller than the first particle into a liquid specimen (second specimen) containing primarily the first particle and a liquid specimen (third specimen) containing primarily the second particle. The first specimen is a blood specimen. The blood specimen is, for example, whole blood or a specimen prepared from whole blood. The first particles are, for example, Circulating Tumor Cells (CTCs) in the blood, and the second particles are, for example, white blood cells, red blood cells, platelets, and nanoparticles. Nanoparticles are, for example, extracellular vesicles such as exosomes, microscopic proteins, and microscopic debris. The size of a particle is, for example, the diameter or radius of the particle, the area or perimeter length when viewed in plan view. In the following description, particle diameter refers to the diameter of a particle.

Hereinafter, for convenience, X, Y, and Z axes orthogonal to each other are added to each figure. The Z-axis direction is the height direction of the particle separation chip 1 and the particle separation apparatus 2 to be described later. The X-Y axis is parallel to the horizontal plane. In the embodiment, the specimen flows in the direction of the X axis, and the left side of the flow path is marked as the upstream side and the right side of the flow path is marked as the downstream side in the figure.

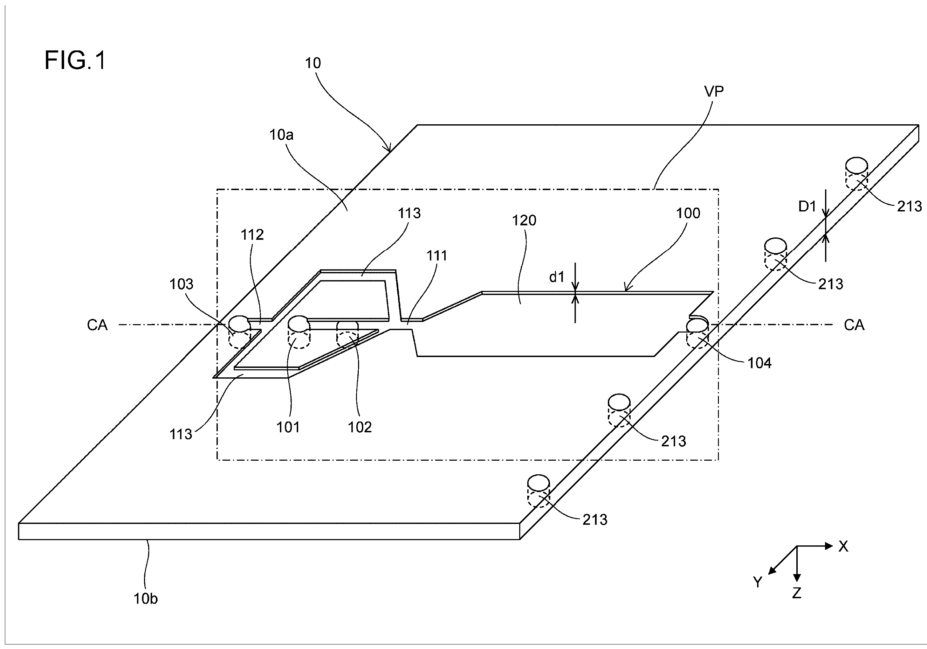

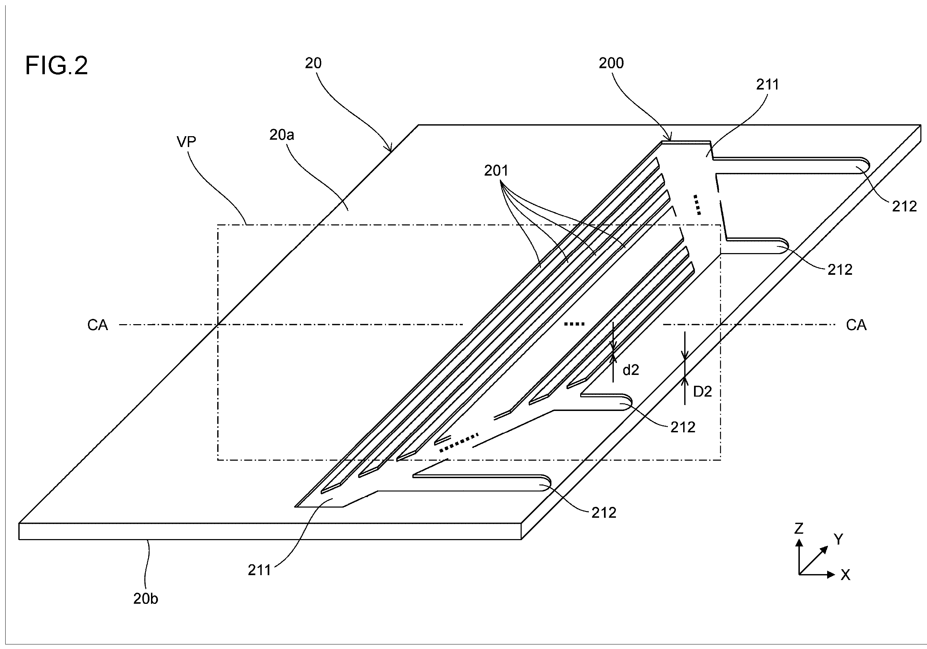

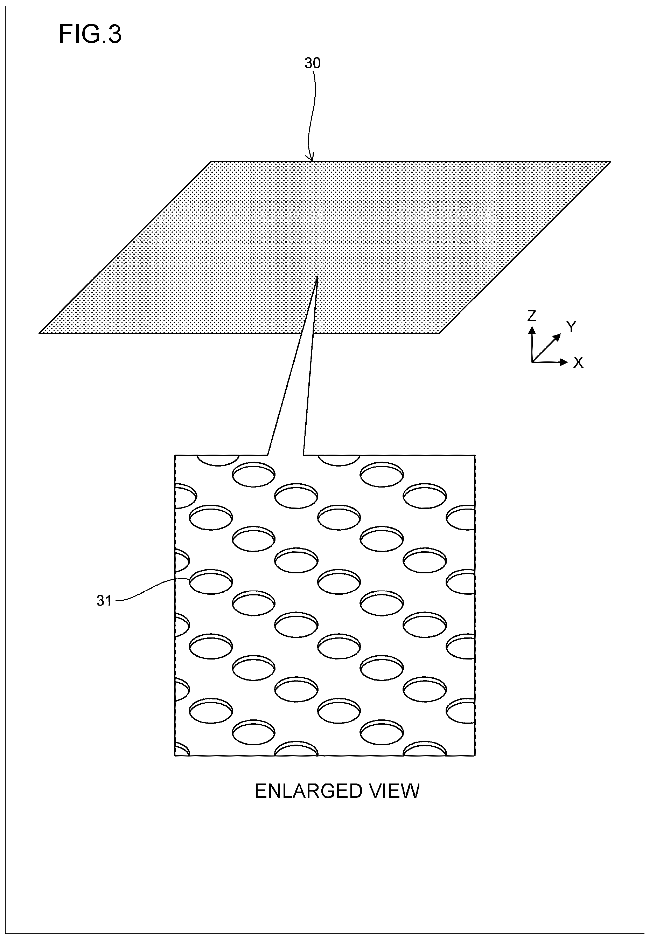

The configuration of the particle separation chip 1 is described referring to FIGS. 1 to 5. The particle separation chip 1 includes an upper substrate 10 (shown in FIG. 1), a lower substrate 20 (shown in FIG. 2), and a perforated sheet 30 (shown in FIG. 3) sandwiched between the upper substrate 10 and lower substrate 20.

FIG. 1 is a schematic diagram of the upper substrate 10.

The upper substrate 10 includes a plate-like member having an opposing surface 10a and an upper surface 10b parallel to the X-Y plane and with a spacing of D1 between the two surfaces. The upper substrate 10 is placed plane symmetrically in the Y-axis direction with respect to a hypothetical vertical plane VP that intersects the upper substrate 10 vertically at a central axis CA parallel to the X-axis direction. The facing surface 10a is the surface facing the lower substrate 20, which is described below, and the upper surface 10b is the top surface of the particle separation chip 1 when the particle separation chip 1 is completed.

The upper substrate 10 includes a material that allows blood specimens to flow smoothly over the surface and to be processed with high precision, such as polydimethylsiloxane (PDMS). The upper substrate 10 may also include glass, cyclo-olefin polymer (COP), cyclic olefin copolymer (COC), etc.

The main flow path 100 with a predetermined depth d1 is placed on the facing surface 10a. In addition, the four outlets 213 including through holes are formed along the right-side end of the upper substrate. The main flow path 100 and the four outlets 213 are formed, for example, by a semiconductor fabrication process. The main flow path 100 has a recessed portion in the Z-axis direction with respect to the facing surface 10a, and the bottom surface of this recessed portion is parallel to the X-Y plane. The main flow path 100 is formed by overlapping the upper substrate 10 and the lower substrate 20 to form a flow path through which the specimen may be transferred. The four outlets 213 are part of the branch flow path 200, which will be described later.

The main flow path 100 includes the inlets 101, 102, and 103 arranged on the left side of the main flow path 100, the flow paths 111 and 112, a pair of flow paths 113, a flow path 120 arranged in the center of the main flow path 100, and an outlet 104 arranged on the right side of the main flow path 100.

The Inlets 101 to 103 and the outlet 104 are formed by through holes through the upper substrate 10 in the Z-axis direction and are arranged in a row along the vertical plane VP and the central axis CA. The two outlets 213 are arranged in a row on each side of the outlet 104 along the Y-axis. The four outlets 213 are formed by through holes through the upper substrate 10 in the Z-axis direction.

The flow paths 111 and 112 extend in the X-axis direction and are arranged along the central axis CA. The width of flow paths 111 and 112 is consistent. The upstream end of the flow path 111 leads to the inlet 101. The downstream end of the flow path 111 leads to the flow path 120. The center of the flow path 111 leads to the inlet 102.

The Inlet 103 is arranged at the left of the inlet 101. The left-side end of flow path 112 is connected to the inlet 103. A pair of the flow paths 113 are branched from flow path 112 along both sides of the vertical plane VP in the Y-axis direction . The pair of the flow paths 113 bypass the inlets 101 and 102 and connect the flow path 112 to the flow path 111. The right-hand end of the pair of the flow paths 113 connects at an angle to the flow path 111 between the inlets 102 and the flow path 120. The width of the pair of flow paths 113 is consistent.

The flow path 120 extends in the X-axis direction and is located on the central axis CA. The width in the Y-axis direction of the flow path 120 gradually increases in the left portion of the flow path 120 as it progresses from the connection of flow paths 111 and 120 to the center. The width in the Y-axis direction of flow path 120, except for the left side portion, is consistent and wider than the width of flow paths 111 to 113. The right-side end of flow path 120 is connected to outlet 104.

The size of the main flow path 100 may be set, for example, as follows.

When the external shape of the particle separation chip 1 is 150 mm square in plan view, the length of the flow path 120 in the X-axis direction may be set to 150 mm or less, for example. The width of the flow path 120 in the Y-axis direction may be set to about one-third of the length of one side of the outline, for example, 50 mm or less.

The width of the flow path 120 in the Y-axis direction may be set to 500 $\mu$m or more, for example, when 5 mL of whole blood is flowed into the particle separation chip 1 as a blood specimen in a single particle separation process. According to the embodiment, if the Y-axis width of the flow path 120 is 500 $\mu$m, for example, the time required to flow 5 mL of whole blood is 200 minutes, and the throughput of the particle separation process is 25 $\mu$L/min. If the Y-axis width of flow path 120 is 50 mm, for example, the time required to flow 5 mL of whole blood is 2 minutes, and the throughput of the particle separation process is 2.5 mL/min. If a smaller amount of whole blood is flowed to the particle separation chip 1 during one particle separation process, the Y-axis width of flow path 120 may be set to 100 $\mu$m or more, for example. Throughput is the amount of specimen that is subjected to the particle separation process per unit of time. If the specimen is a blood specimen, it is the amount of undiluted whole blood that is subjected to the particle separation process per unit of time.

The depth d1 of the flow path 120 (the height in the Z-axis direction of the recess corresponding to the flow path 120 formed in the upper substrate 10) may be set larger than the particle diameter of the first particle so that the first particle may be transferred in the flow path 120. When the first particle is a CTC, the depth d1 of the flow path 120 may be set to, for example, 100 μm or greater, and when the first particle is a nanoparticle, the depth d1 of the flow path 120 may be set to, for example, 50 nm or greater. Since the flow path 120 is formed by a semiconductor fabrication process, the depth d1 of the flow path 120 may be set to 1 mm or less, for example.

The depth of the flow paths 111 to 113 may also be set for the same reason as the depth of flow path 120, for example, between 50 nm and 1 mm.

FIG. 2 is a schematic diagram of the lower substrate 20.

The lower substrate 20 includes a plate-like member having an opposing surface 20a and a lower surface 20b parallel to the X-Y plane, with a spacing of D2 between the two surfaces. The lower substrate 20 is placed plane symmetrically in the Y-axis direction with respect to a hypothetical vertical plane VP that intersects the lower substrate 20 vertically at a central axis CA parallel to the X-axis direction. The facing surface 20a is the surface facing the upper substrate 10, and the lower surface 20b is the surface that will be the lower surface of the particle separation chip 1 when the particle separation chip 1 is completed.

The lower substrate 20 contains a material that allows blood specimens to flow smoothly over its surface and to be processed with high precision. Like the upper substrate 10, the lower substrate 20 in this embodiment includes, for example, polydimethylsiloxane (PDMS). The lower substrate 20 may also include glass, cyclo-olefin polymer (COP), cyclic olefin copolymer (COC), etc.

A branch flow path 200 of a predetermined depth d2 is formed on the facing surface 20a. The branch flow path 200 is formed, for example, by a semiconductor fabrication process. The branch flow path 200 has a recessed portion in the Z-axis direction with respect to the facing surface 20a, and the bottom surface of the recessed portion is parallel to the X-Y plane. The branch flow path 200 forms a flow path when the upper substrate 10 and the lower substrate 20 are superimposed on each other, allowing specimens to be transferred through it.

Branch flow path 200 includes a plurality of flow paths 201, two relay flow paths 211, and four relay flow paths 212. The branch flow path 200 also includes the four outlets 213 shown in FIG. 1. In FIG. 2, a portion of the plurality of flow paths 201 and a portion of the two relay flow paths 211 are omitted by dotted lines for convenience.

A plurality of flow paths 201 extend parallel to the Y-axis direction and are aligned in the X-axis direction at predetermined intervals. The length of each flow path 201 in the Y-axis direction becomes shorter as it proceeds to the right in the X-axis direction. In other words, the overall outline of the plurality of flow paths 201 is trapezoidal in plan view.

Two relay flow paths 211 are located at one end and the other end of the plurality of flow paths 201, respectively, and are connected to the plurality of flow paths 201. The relay flow paths 211 extend so that as they proceed to the right side of the main flow path 100 (see FIG. 1), their ends approach the central axis CA. The four relay flow paths 212 extend parallel to the X axis direction. The two relay flow paths 212 are connected to the relay flow path 211 at one end of the plurality of flow paths 201 and the other end of the plurality of flow paths 201, respectively.

The size of the branch flow paths 200 may be set, for example, as follows.

When the external shape of the particle separation chip 1 is 150 mm square in plain view, the Y-axis length of the plurality of flow paths 201 may be set to be less than 150 mm, for example. The Y-axis length of the plurality of flow paths 201 may all be set longer than the Y-axis width of the flow path 120.

The width (length in the X-axis direction) of the flow path 201 may be set larger than the particle diameter of the second particle so that the second particle may be transferred in the flow path 201. If the second particles are white blood cells, red blood cells, and platelets, the width of the flow path 201 may be set to, for example, 100 μm or greater, and if the second particles are nanoparticles, the width of the flow path 201 may be set to, for example, 50 nm or greater. The width of the flow path 201 may be set to less than 1 mm, for example, to allow a sufficient number of flow paths 201 to be placed.

The number of multiple flow paths 201 may be set between 2 and 1500. According to the inventors' study, when the width of the flow path 201 is 100 μm and the spacing between adjacent flow path 201 is 50 μm, about 150 flow paths 201 may be formed. According to the semiconductor fabrication process, the width and spacing of the above flow paths 201 may be further reduced to about 1/100, making it possible to form 15,000 flow paths 201. Two or more flow paths 201 are placed to realize the Hydrodynamic Filtration (HDF) method described below.

The depth d2 of the flow path 201 (the height in the Z-axis direction of the recess corresponding to the flow path 201 formed in the lower substrate 20) may also be set larger than the diameter of the second particles so that the second particles may be transferred in the flow path 201. If the second particles are white blood cells, red blood cells, and platelets, the depth d2 of the flow path 201 may be set to, for example, 100 μm or greater, and if the second particles are nanoparticles, the depth d2 of the flow path 201 may be set to, for example, 50 nm or greater. Since the flow path 201 is formed by a semiconductor fabrication process, the depth d2 of the flow path 201 may be set to 1 mm or less, for example.

The depth of the relay flow paths 211 and 212 may also be set for the same reason as the depth of the flow path 201, for example, between 50 nm and 1 mm.

FIG. 3 shows a schematic and enlarged view of the perforated sheet 30.

The perforated sheet 30 is rectangular in plain view and is a thin-film sheet. The perforated sheet 30 includes a plurality of holes 31 that penetrate the perforated sheet 30 in the Z-axis direction. As described below, the second particles flowing in the main flow path 100 move through the holes 31 of the perforated sheet 30 to the branch flow path 200. The perforated sheet 30 contains a material that allows the blood specimen to flow smoothly across the surface, allows the holes 31 to be formed with high precision, and is not easily damaged. The perforated sheet 30 in this embodiment includes nickel, for example. The perforated sheet 30 does not necessarily have to be metal and may include glass or PDMS.

The size of the perforated sheet 30 may be set, for example, as follows.

The thickness of the perforated sheet 30 may be set, for example, between 1 $\mu$m and 1 mm so that separation of the second particles by the Hydrodynamic Filtration is achieved. According to the inventors' study, even if the thickness of the perforated sheet 30 is set to 1 mm, the fluid resistance on the second particles passing through the holes 31 by the perforated sheet 30 is almost negligible. The hole diameter of the holes 31 may be set, for example, to be between 30 nm and 100 $\mu$m, more preferably between 50 nm and 100 $\mu$m, so that the first particles may smoothly proceed downstream in the flow path 120 of the main flow path 100.

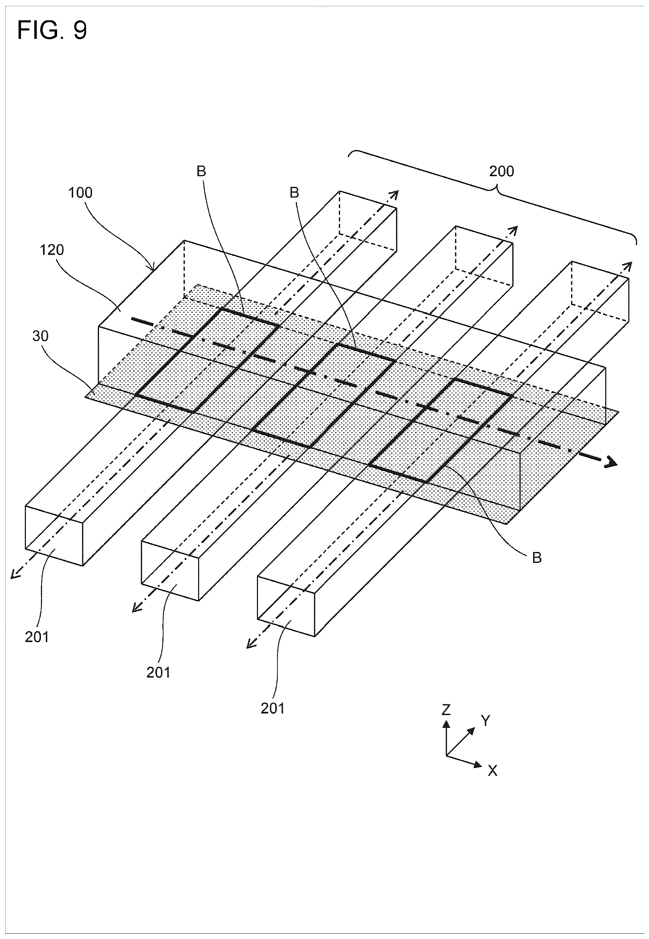

The porosity, which is the percentage of the area of the holes 31 in the perforated sheet 30, may be set greater than 0% and less than 50%, for example, to maintain the strength of the perforated sheet 30. In this embodiment, the size and shape of all the holes 31 formed in the perforated sheet 30 are the same as each other, and all the holes 31 are evenly distributed in the perforated sheet 30. Therefore, the perforation rate of the perforated sheet 30 is substantially the same value as each other at a plurality of branches B (see FIG. 9) where the main flow path 100 and branch flow path 200 are connected, as described below.

The perforation ratio of the perforated sheet 30 may be different from each other at the plurality of branches B. In this case, the perforated sheet 30 may have a different number of holes 31 and a different diameter of holes 31 at a plurality of branches B. The perforated sheet 30 may have a different number of holes 31 in different regions within one branch B, and the diameters of the holes 31 may be different from each other.

The length of the perforated sheet 30 may be set longer than the constant width of the flow path 120 in the Y-axis direction of the upper substrate 10. The X-axis length of the perforated sheet 30 may be set longer than the X-axis length of the entire plurality of flow paths 201 of the lower substrate 20.

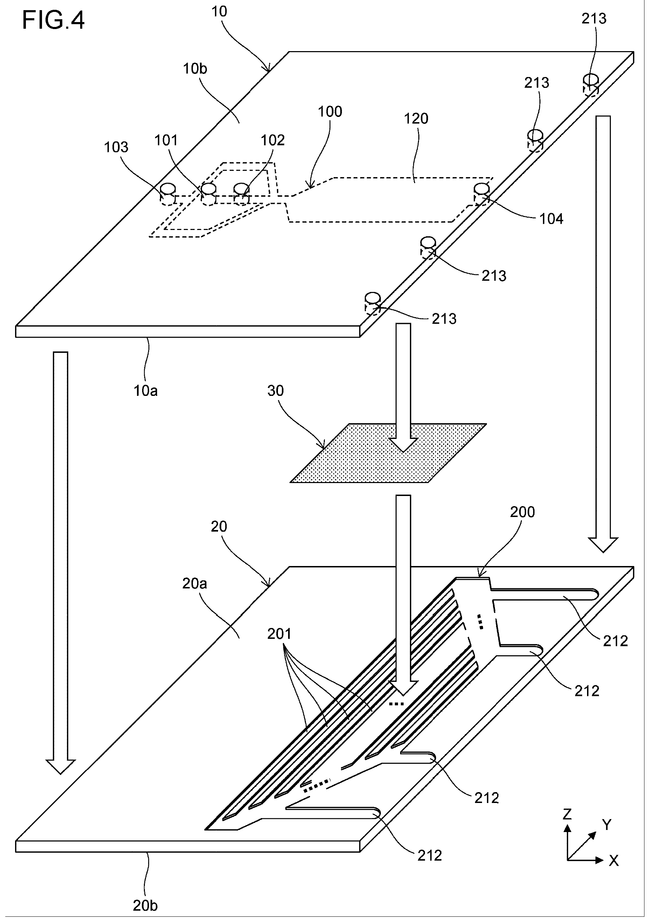

FIG. 4 is a diagrammatic view of the assembly of the upper substrate 10, lower substrate 20, and perforated sheet 30. In FIG. 4, for convenience, the outline of the facing surface 10a of the main flow path 100 is shown as a dashed line.

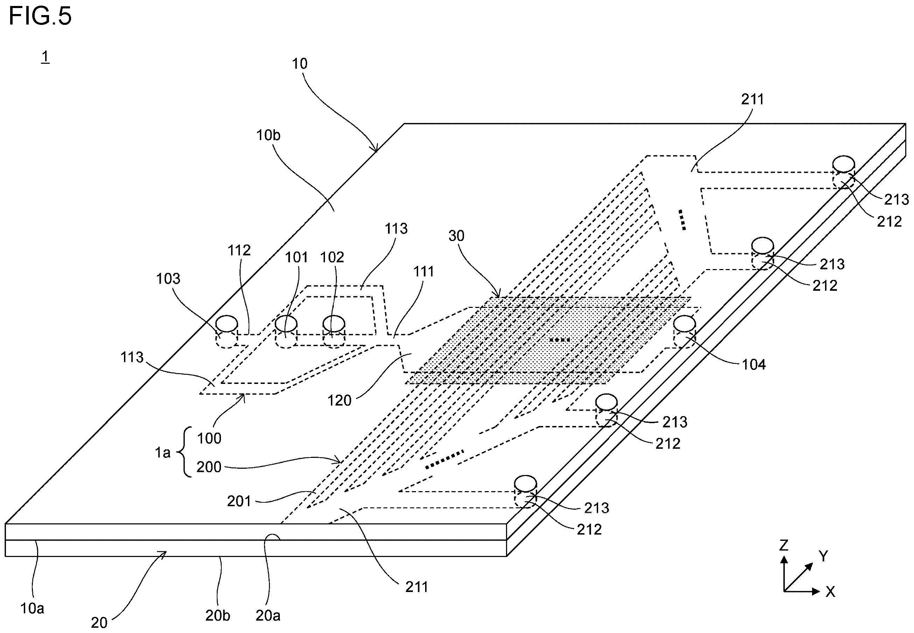

The upper substrate 10 shown in FIG. 1 is joined to the lower substrate 20 shown in FIG. 2 with the front and back sides inverted. In other words, the upper substrate 10 and lower substrate 20 are joined so that the facing surface 10a of the upper substrate 10 and the facing surface 20a of the lower substrate 20 face each other. At this time, the perforated sheet 30 shown in FIG. 3 is placed between the upper substrate 10 and the lower substrate 20. When the upper substrate 10 and lower substrate 20 contain PDMS, surface modification is performed on the silicon dioxide on the surfaces of the facing surfaces 10a and 20a by oxygen plasma. This bonds the facing surfaces 10a and 20a. Surface modification may also be performed by UV ozone treatment using ultraviolet light. Thus, the particle separation chip 1 is completed as shown in FIG. 5.

FIG. 5 is a schematic diagram of the particle separation chip 1.

The main flow path 100 includes a recess formed in the facing surface 10a of the upper substrate 10 and the facing surface 20a of the lower substrate 20 opposite this recess. The branch flow path 200 includes a recess formed in the facing surface 20a of the lower substrate 20 and the facing surface 10a of the upper substrate 10 opposite this recess. The main flow path 100 and the branch flow path 200 constitute a micro flow path 1a. A micro flow path is generally a flow path with a depth and width of 10 $\mu$m to 1 mm. The outlet 213 of the upper substrate 10 overlaps the right-side end of the relay flow path 212 of the lower substrate 20 in the X-axis direction, and the outlet 213 is connected to the relay flow path 212.

In the X-axis direction, the perforated sheet 30 is placed to cover the entirety of the plurality of flow paths 201 of the branch flow path 200. In the Y-axis direction, the perforated sheet 30 is positioned inside the shortest flow path 201.

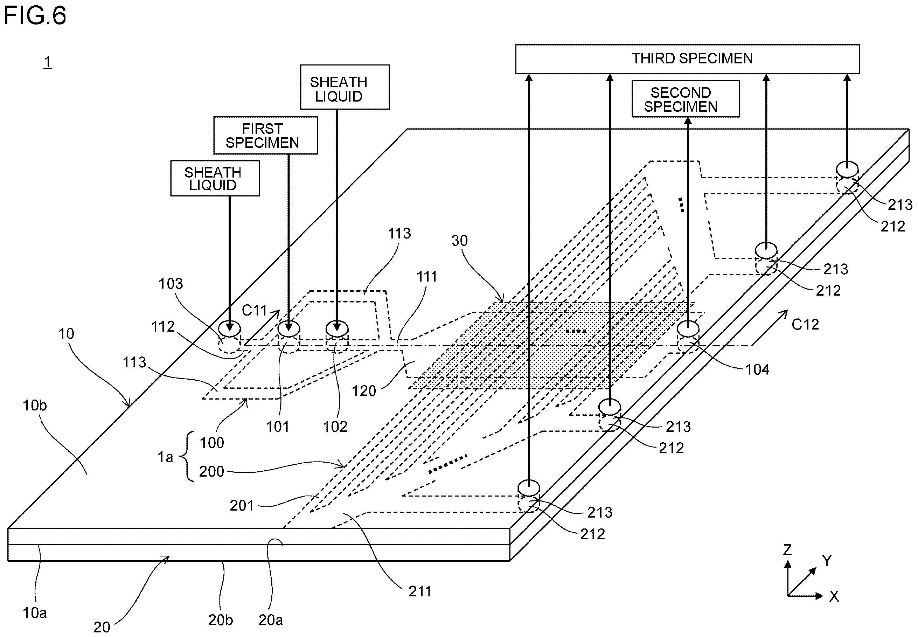

Referring now to FIGS. 6 to 11, the action of the separation of the first and second particles in the specimen by the particle separation chip 1 is described.

FIG. 6 schematically illustrates the injection of specimen and sheath liquid into the inlet 101 to 103 of the particle separation chip 1 and the pouring out of specimen from the outlet 104 and 213.

A liquid specimen containing a first particle and a second particle smaller than the first particle is poured into inlet 101 as the first specimen. Sheath liquid is poured into inlets 102 and 103. For example, Cellpack (registered trademark) manufactured by Sysmex Corporation may be used as the sheath liquid. From outlet 104, a liquid specimen containing mainly first particles is withdrawn as a second specimen. From the plurality of outlets 213, a liquid specimen containing mainly the second particles is taken out as a third specimen.

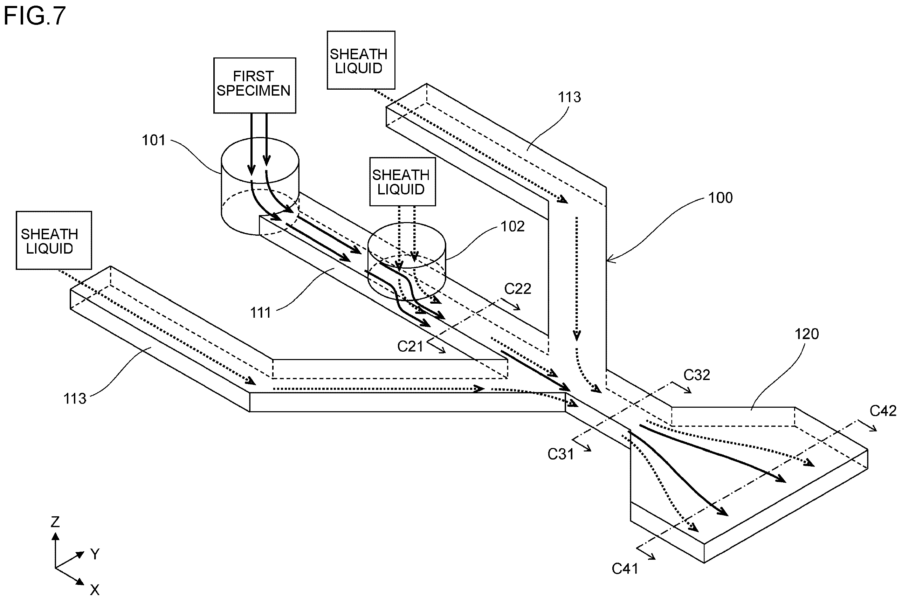

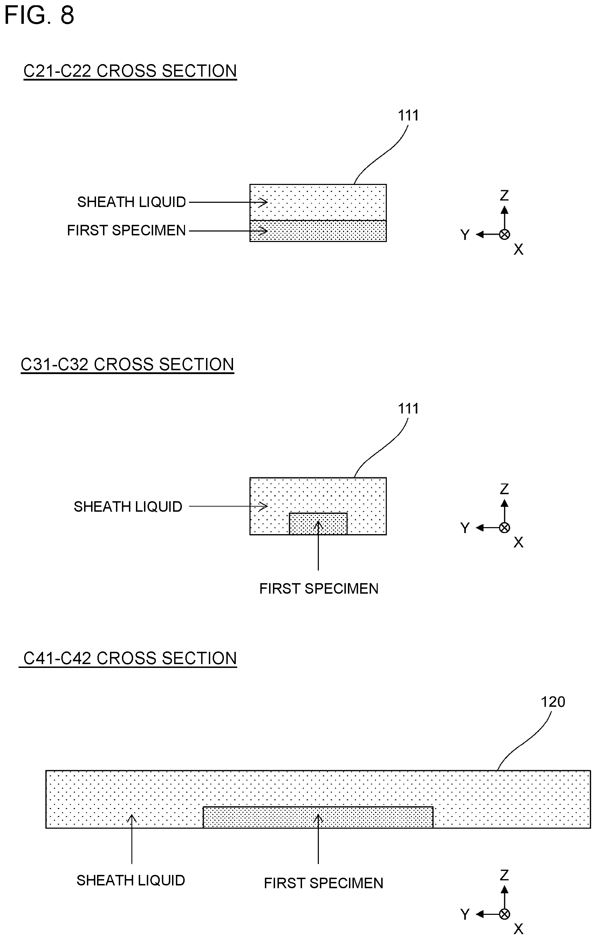

FIG.s 7 and 8 show schematically how the sheath liquid restricts the range of flow of the first specimen. For convenience, Fig. 7 schematically shows the inlets 101 and 102 and the vicinity of the connections of the flow paths 111 and 113. The top, middle, and bottom sections of FIG. 8 show the C21 to C22, C31 to C32, and C41 to C42 cross sections of FIG. 7, respectively.

As shown in FIG. 7, the first specimen is flowed through inlet 101 into flow path 111. The sheath liquid injected through inlet 102 pushes the first specimen flowing in flow path 111 in a downward direction. As a result, the range of the first specimen flowing in the flow path 111 is restricted by the sheath liquid to near the bottom of the flow path 111, as shown in the upper part of FIG. 8.

As shown in FIG. 7, a pair of flow paths 113 are connected to both sides of flow path 111 between inlet 102 and flow path 120, in a direction inclined to the X-axis direction. The sheath liquid flowing from the pair of flow paths 112 into the flow path 111 pushes the first specimen flowing downstream from below the inlet 102 in a direction closer to the vertical plane VP (see FIGS. 1 and 2). As a result, the range of the first specimen flowing in the flow path 111 is restricted by the sheath liquid to near the center of the flow path 111, as shown in the middle of FIG. 8.

As shown in FIG. 7, the width of flow path 120 is wider than that of flow path 111, so the first specimen flowing from flow path 111 to flow path 120 spreads out in the Y-axis direction and flows downstream. As shown in the lower part of FIG. 8, the range of the first specimen is held toward the center by the sheath liquid from the pair of flow paths 113, although it spreads in the Y-axis direction. Therefore, it is restricted to the central area of the flow path 120.

FIG. 9 is a diagrammatic view of the vicinity of the intersection of the flow path 120 of the main flow path 100 and the flow path 201 of the branch flow path 200.

In the area where flow path 120 and flow path 201 overlap in plan view, the recesses on the side of the flow path 120 and the recesses on the side of the flow path 201 are connected in the Z-axis direction. The intersection surface of the flow path 120 and the flow path 201 is an opening, and a perforated sheet 30 is placed in this opening to close the opening. The point corresponding to the opening on the intersection surface of the flow path 120 and the flow path 201 where the perforated sheet 30 is placed is the branch B. Therefore, the area of the branch B is equal to the area of the opening in the intersection surface of the flow path 120 and the flow path 201. The branch flow path 200 is connected to the main flow path 100 at a plurality of branches B along the flow direction (X-axis direction) of the main flow path 100. The perforated sheet 30 is arranged to span the plurality of branches B.

In this embodiment, the plurality of branches B have the same shape as each other and are placed at the same Y-axis and Z-axis positions as each other. The plurality of branches B are aligned so that the spacing in the X-axis direction is the same as each other. However, the plurality of branches B may be placed to be spaced apart from each other in the X-axis direction between the inlet 101 and the outlet 104 of the main flow path 100. For example, the plurality of branches B may have different shapes and different areas from each other. The plurality of branches B may be placed at different Y-axis locations from each other or at different Z-axis locations from each other. The plurality of branches B may be spaced differently from each other.

When the first specimen flowing downstream through the flow path 120 passes through the branch B, the second particles contained in the first specimen flow through the holes 31 of the perforated sheet 30 to the flow path 201. The third specimen containing the second particles is then taken out of the outlet 213 (see FIG. 6). On the other hand, the first particles contained in the first specimen flow downstream in the flow path 120 without flowing into the flow path 201. The second specimen containing the first particles is then taken out of outlet 104 (see FIG. 6).

As shown in the lower part of FIG. 8, the first specimen flows to the branch B with the upper part of the thickness direction and both ends of the width direction restricted, so that the second particles in the first specimen may be smoothly separated into the flow path 201.

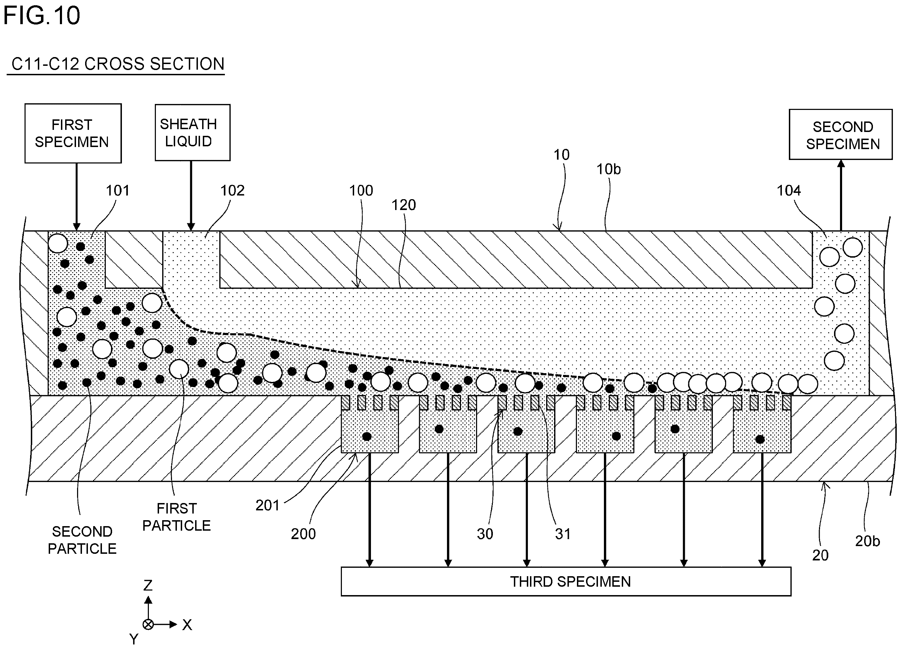

FIG. 10 schematically illustrates the separation of the first and second particles at the branch B shown in FIG. 9. FIG. 10 shows the C11 to C12 cross section of FIG. 6.

In FIG. 10, for convenience, the first particle is shown as a white circle and the second particle is shown as a black circle. Components other than the first and second particles in the first specimen are indicated by darker shading, and the sheath liquid injected through inlets 102 and 103 is indicated by lighter shading. Of the entire perforated sheet 30, only the perforated sheet 30 at the location of branch B (see FIG. 9) is shown.

As described in FIGS. 7 and 8, the first specimen injected through inlet 101 is pressed downward by the sheath liquid injected through inlet 102, so that the first specimen flows downstream along the bottom of the main flow path 100. The plurality of flow paths 201 in one or more embodiments allows the first and second particles to be separated by Hydrodynamic Filtration (HDF).

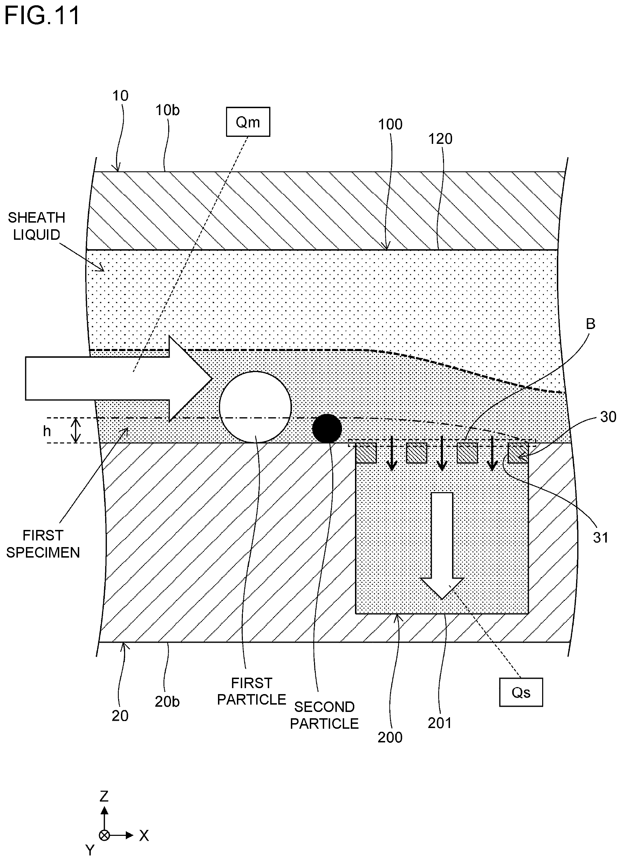

FIG. 11 is an enlarged view schematically showing the vicinity of one flow path 201 in FIG. 10.

If the flow rate in flow path 120 flowing upstream to one flow path 201 is Qm and the flow rate into that flow path 201 is Qs, the relationship between flow rate Qm and flow rate Qs may be expressed by the following EQ.(1) using the liquid removal rate a at the branch B concerned.

$$Qs = Qm \times a \quad ...EQ.(1)$$

The liquid removal rate a at the branch B may be set to a value where the second particles flow into the branch flow path 200 and the first particles flow into the main flow path 100. According to the Hydrodynamic Filtration, the height h of the liquid portion of the first specimen that flows into each flow path 201 is determined by the liquid removal rate a. Therefore, in this method, the liquid removal rate a is set so that the height h of the liquid portion of the first specimen is smaller than the radius of the first particle and larger than the radius of the second particle. This causes the first particles to be transferred downstream along the flow of the first specimen. The second particles are separated into the respective flow paths 201 by the liquid portion of the first specimen in the height h range.

According to one or more embodiments, the liquid removal rate a at all branches B may be set to substantially the same value as each other. When the liquid removal rate a in each flow path 201 is equal to each other, the height h of the liquid portion of the first specimen flowing into each flow path 201 is also equal to each other. This allows separation of a second particle of a constant size at a plurality of branches B in a full and uniform manner.

Here, the liquid removal rate a at branch B is determined by the fluid resistance of branch flow path 200 from branch B to outlet 213 (see FIG. 6). Therefore, according to one or more embodiments, the fluid resistance of the branch flow path 200 from the branch B to the outlet 213 at the upstream side may be set larger than the fluid resistance of the branch flow path 200 from the branch B to the outlet 213 at the downstream side. This allows the fluid resistance at the upstream branch B to be greater than the fluid resistance at the downstream branch B, and the liquid removal rate a at each branch B may be set to substantially equal values to each other.

According to one or more embodiments, the size of the relay flow paths 211 and 212 (see FIG. 6) is larger than the flow path 201, so the liquid removal rate a at the branch B is essentially determined by the fluid resistance of the flow path 201. Therefore, in one or more embodiments, the Y-axis length of the flow path 201 at the upstream side is set longer than the Y-axis length of the flow path 201 at the downstream side. This allows the fluid resistance of the flow path 201 leading to the upstream branch B to be set greater than the fluid resistance of the flow path 201 leading to the downstream branch B.

The liquid removal rate a at the plurality of branches B may all be set to be greater than 0% and less than 50%. This allows a second particle having a particle diameter smaller than the depth d1 of the flow path 120 to be separated into the flow path 201.

According to one or more embodiments, the holes 31 in each of the perforated sheets 30 placed at the branch B may form a flow of specimen moving the second particle from the flow path 120 of the main flow path 100 to the flow path 201 of the branch flow path 200, as shown by the bold arrows at the positions of the holes 31 in FIG. 11. Therefore, to increase throughput, even if the width of the flow path 201 in the X-axis direction is widened to increase the flow rate of the flow path 201, as shown in FIG. 11, the flow of specimen of the second particles toward the flow path 201 may be spread into the multiple holes 31 of the perforated sheet 30. This allows the flow of the second particle specimen to form over the entire flow path 201, rather than only in a part of the flow path 201. As shown in FIG. 11, the multiple holes 31 in the perforated sheet 30 and the wide width of the flow path 201 in the X-axis direction may prevent clogging in the perforated sheet 30 and the flow path 201.

Thus, the second particles may be efficiently separated into flow path 201 without clogging, and the throughput of particle separation may be efficiently increased by increasing the flow rate of the main flow path 100 and branch flow path 200.

According to one or more embodiments, the particle diameter of the second particle that is separated into the flow paths 201 is not determined by the relationship between the hole diameter of the holes 31 of the perforated sheet 30 and the particle diameter of the second particle, but by the height h based on the liquid removal rate a. In other words, the perforated sheet 30 is not used as a filter to separate the second particles from the first specimen by the holes 31, but to spread the flow of the second particles toward the flow path 201, as described above. Therefore, the hole diameter of hole 31 may, for example, be larger than the diameter of the second particles to be separated.

Returning to FIG. 10, as the second particles are separated at the multiple branches B, the second particles and the liquid portion of the first specimen flow in the flow path 201 of the branch flow path 200. As a result, the third specimen taken out of outlet 213 (see FIG. 6) will primarily contain the second particles. On the other hand, the first particles and sheath liquid will remain in flow path 120 of the main flow path 100. This means that the second specimen taken out of outlet 104 will primarily contain the first particles.

Next, the particle separation apparatus 2, which separates the first particles from the second particles, is described.

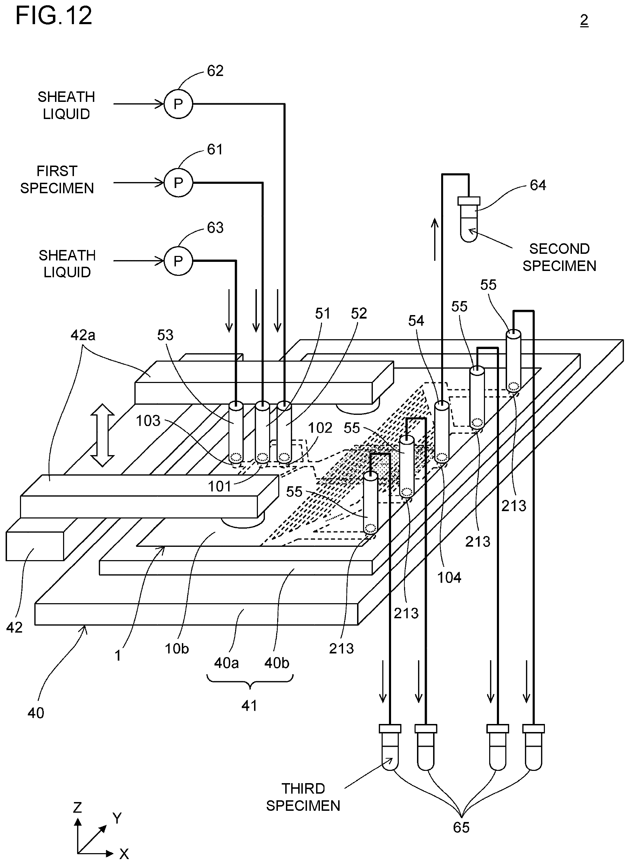

FIG. 12 shows a schematic diagram of the particle separation apparatus 2.

Particle separation apparatus 2 includes a particle separation chip 1, a fixed section 40, three inlet nozzles 51 to 53, five outlet nozzles 54 and 55, a liquid pumping section 61 to 63, a first collection section 64, and four second collection sections 65.

The particle separation chip 1 is cleaned and reused each time a particle separation process is performed. The particle separation chip 1 may be a replaceable particle separation chip that is replaced with a new one each time a particle separation process is performed.

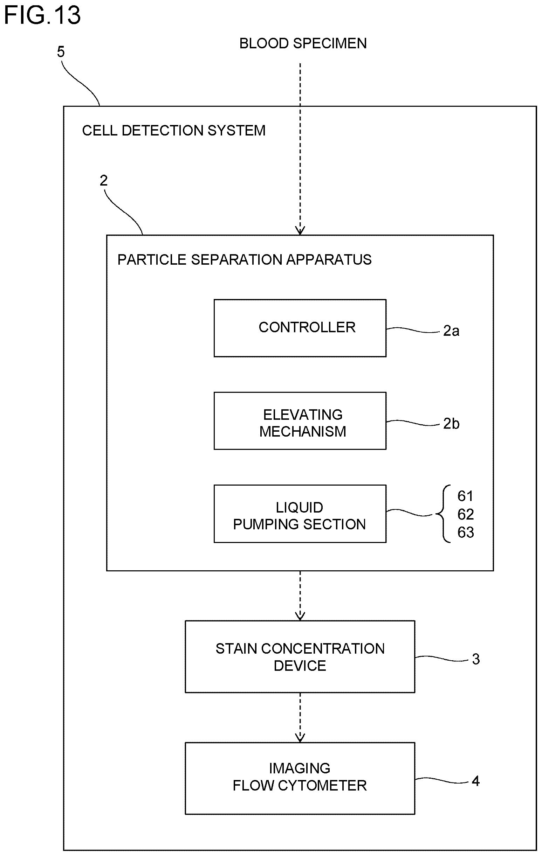

The fixed section 40 includes a setting part 41 and an elevating part 42. The setting part 41 includes a flat plate 40a parallel to the X-Y plane and a frame 40b installed on the upper surface of the flat plate 40a. In plan view, an opening is formed in the center of the frame 40b, which is approximately the same size as the outer shape of the particle separation chip 1, and the particle separation chip 1 is installed in this opening. The elevating part 42 is supported by the elevating mechanism 2b (see Fig. 13) so that it may be moved in the Z-axis direction. The elevating part 42 includes an arm 42a extending above the particle separation chip 1 placed in the frame 40b.

The upper ends of the inlet nozzles 51 to 53 are connected via tubing to the liquid pumping section 61 to 63, respectively. The liquid pumping sections 61 to 63 are, for example, syringe pumps. The liquid pumping section 61 is capable of pumping a predetermined amount of the first specimen to the inlet nozzle 51 at a predetermined rate. The liquid pumping sections 62 and 63 are capable of pumping a predetermined amount of sheath liquid to the inlet nozzles 52 and 53, respectively, at a predetermined rate.

The top end of the outlet nozzle 54 is connected via tubing to the first collection section 64. The top ends of the four outlet nozzles 55 are each connected via tubing to the second collection section 65. The first collection section 64 and the four second collection sections 65 are containers for collecting specimens. A liquid pumping section including a syringe pump may be placed in the tubing connecting the outlet nozzle 54 to the first collection section 64 to pump the second specimen to the first collection section 64. A liquid pumping section including a syringe pump may be placed in the tubing connecting the outlet nozzle 55 to the second collection section 65 to send the third specimen to the second collection section 65.

When the particle separation process is performed, the particle separation chip 1 is placed in the opening of the frame 40b, and the top surface of the particle separation chip 1 (upper surface 10b of the upper substrate 10) is held downward by the arm 42a as the elevating part 42 moves downward. This fixes the particle separation chip 1. Inlet nozzles 51 to 53 are then connected to the inlets 101 to 103 of the particle separation chip 1, respectively, and outlet nozzles 54 and 55 are connected to the outlets 104 and 213 of the particle separation chip 1, respectively.

In this state, liquid pumping section 62 sends sheath liquid to flow path 111 (see FIG. 6) via inlet 102, and liquid pumping section 63 sends sheath liquid to flow paths 112 and 113 (see FIG. 6) via inlet 103. The liquid pumping section 61 then sends the first specimen to flow path 111 via inlet 101. This separates the specimen containing the first and second particles (first specimen) into a specimen containing the first particle (second specimen) and a specimen containing the second particle (third specimen), as described with reference to FIG.s 10 and 11. The second specimen is then collected in the first collection section 64 via outlet 104, and the third specimen is collected in the four second collection sections 65 via the four outlets 213. Thus, the particle separation process is completed.

FIG. 13 is a block diagram of the cell detection system 5.

The cell detection system 5 includes a particle separation apparatus 2, a stain concentration device 3, and an imaging flow cytometer 4. The cell detection system 5 is a system for detecting the first particles (e.g., CTCs) in a blood specimen collected from an examinee.

The particle separation apparatus 2 shown in FIG. 12 includes a controller 2a, an elevating mechanism 2b, and liquid pumping sections 61 to 63. The controller 2a includes, for example, a CPU and memory, and controls each part of the particle separation apparatus 2. The elevating mechanism 2b includes a motor for moving the elevating part 42 of Fig. 12 up and down.

The particle separation apparatus 2 separates the blood specimen using the particle separation chip 1 to obtain a second specimen containing the first particles. The stain concentration device 3 performs a staining process based on the second specimen obtained by the particle separation apparatus 2 to stain the first particles contained in the second specimen. The imaging flow cytometer 4 captures an image of the particles contained in the second specimen that have undergone the staining process. An operator, such as a physician or laboratory technician, refers to the captured image of the imaging flow cytometer 4 to determine the presence or absence of the first particle (e.g., CTC) in the blood specimen collected from the examinee.

<Configuration of examples>

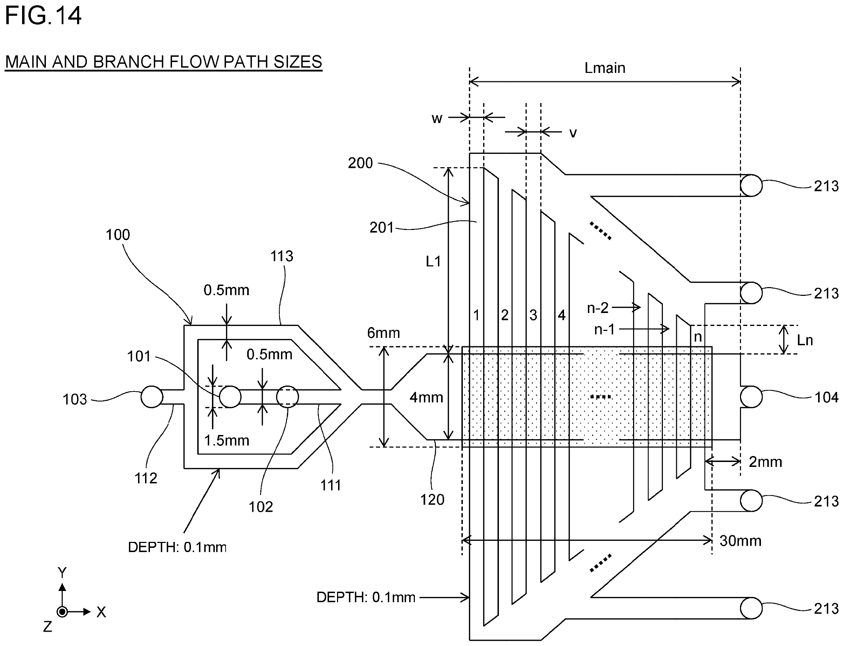

Next, specific examples of the above embodiments are described. In the following examples, the first specimen is whole blood collected from an examinee. The first particle is a cell to be acquired (target cell) and is a Circulating Tumor Cell (CTC) in the blood. The second particles are the cells to be removed (non-target cells) and are white blood cells, red blood cells, and platelets. The inventors created a particle separation chip 1 by combining the chip and perforated sheet described in FIGS. 14 to 18, and actually performed the particle separation process using the created particle separation chip 1.

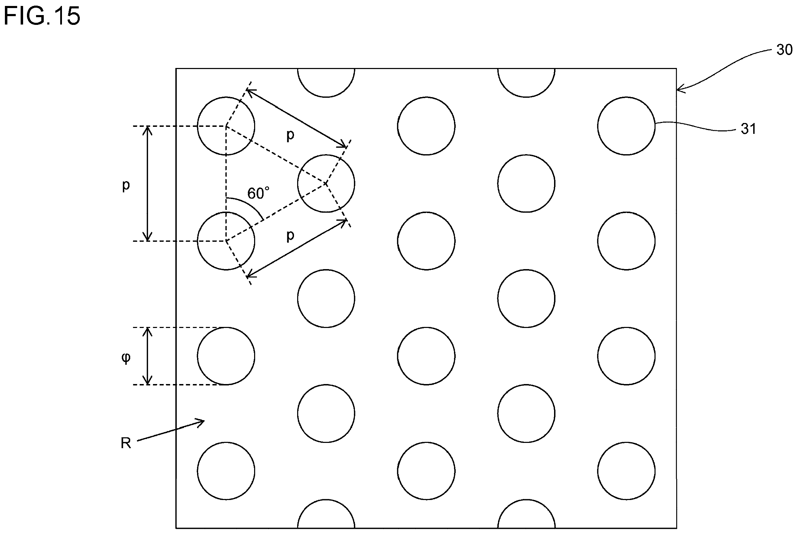

FIG. 14 schematically shows the sizes of the main flow path 100 and the branch flow path 200, in accordance with examples. FIG. 15 schematically shows the arrangement and size of the holes 31 of the perforated sheet 30, in accordance with examples.

As shown in FIG. 14, the depth of the main flow path 100 is 0.1 mm. The diameter of inlets 101 to 103 is 1.5 mm. The width (length in the direction vertical to the direction of specimen travel in the flow path) of flow paths 111 to 113 is 0.5 mm. The width (length in the Y-axis direction) of flow path 120 is 4 mm. The right-side end in the X-axis direction of the region of consistent width in the Y-axis direction of flow path 120 is 2 mm apart in the X-axis direction from the right-side end of the most X-axis direction of the plurality of flow paths 201.

The depth of the branch flow path 200 is 0.1 mm. The distance from the leftmost end of the plurality of flow paths 201 to the right-side end of the region of consistent width in the Y-axis direction of the flow path 120 is Lmain. The number of the plurality of flow paths 201 is n. The serial number of the leftmost flow paths 201 is 1, and the serial number of the rightmost flow path 201 is n. The lengths of the first and nth flow path 201 protruding in the Y-axis direction relative to flow path 120 are L1 and Ln, respectively. The width (length in the X-axis direction) of the flow path 201 is w, and the distance between two adjacent flow paths 201 is v.

The length of the perforated sheet 30 in the X-axis direction is 30 mm, and the width of the perforated sheet 30 in the Y-axis direction is 6 mm. As shown in FIG. 15, the diameter of the holes 31 in the perforated sheet 30 is φ, and the pitch of two adjacent holes 31 is p. The three straight lines connecting the centers of the three adjacent holes 31 form an angle of 60° with each other. The perforation ratio, which is the ratio of the area of the holes 31 of the perforated sheet 30, is R. The thickness of the perforated sheet 30 is 5 μm.

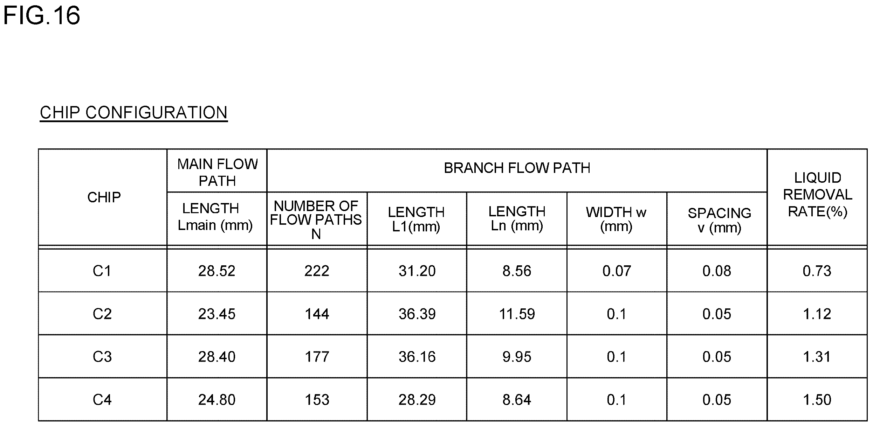

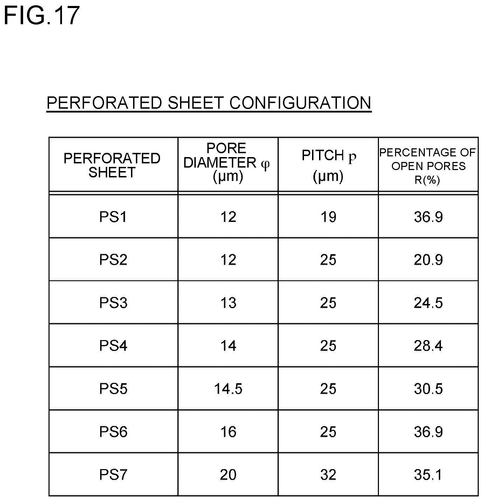

Hereafter, four types of chips C1 to C4 consisting of the upper substrate 10 and lower substrate 20 are created by varying the distance Lmain, number n, length L1, Ln, width w and spacing v, as shown in Fig. 16. In addition, perforated sheets PS1 to PS7 are created by varying the pitch p, hole diameter φ, and perforation ratio R, as shown in Fig. 17.

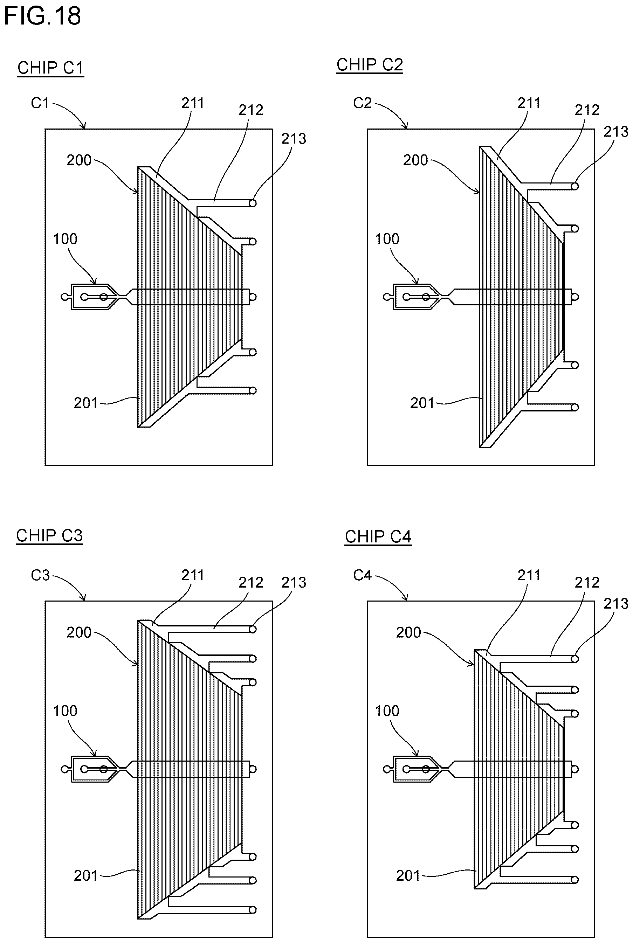

As shown in FIG. 18, in chips C1 and C2, four relay flow paths 212 are provided and four relay flow paths 211 are provided to lead the third specimen to the four relay flow paths 212 respectively. In chips C3 and C4, six relay flow paths 212 are provided and six relay flow paths 211 are provided to lead the third specimen to the six relay flow paths 212 respectively. According to chips C1 to C4 shown in FIG. 18, the third specimen that flows out into one flow path 201 is taken out from the outlet 213 via one relay flow path 211 and one relay flow path 212 corresponding to that flow path 201.

[First example]

In the first example, four different particle separation chips 1 are installed in the particle separation apparatus 2 described above, and a first specimen is run through each particle separation chip 1 to investigate the removal rate of red blood cells and white blood cells.

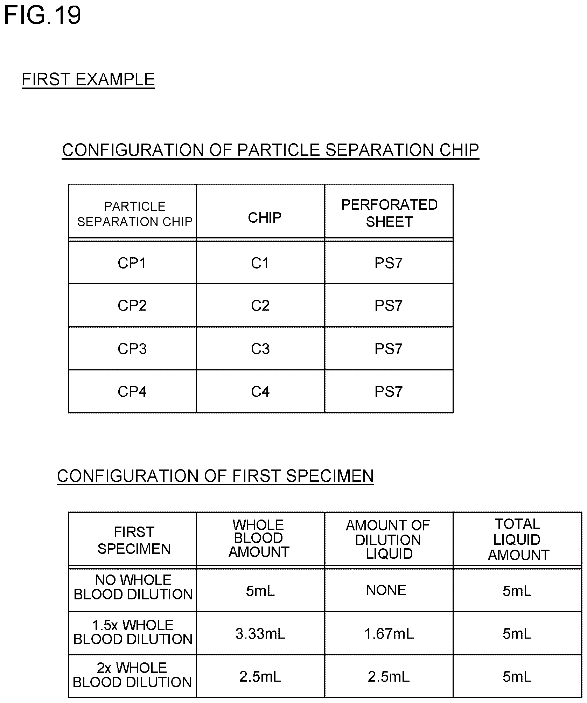

The upper part of FIG. 19 is a table showing the configuration of the four types of particle separation chips CP1 to CP4, according to the first example. The lower part of FIG. 19 is a table showing the components of the three first types of specimens, according to the first example.

As shown in the upper row of FIG. 19, the four types of particle separation chips CP1 to CP4 are a combination of chips C1 to C4 shown in FIG. 16 and the perforated sheet PS7 shown in FIG. 17. As shown in the lower row of FIG. 19, the three types of first specimens have different amounts of whole blood and diluent. The first specimen of "no whole blood dilution" is a 5 mL specimen consisting of whole blood only. The first specimen with "1.5x whole blood dilution" is a 5 mL specimen consisting of 3.33 mL of whole blood diluted with 1.67 mL of diluent. The first "2x whole blood dilution" is a 5 mL specimen of 2.5 mL whole blood diluted with 2.5 mL of the diluent. The whole blood used in the first specimen was obtained from a healthy individual.

In the first example, 1 mL of the above three types of first specimens are flowed separately from inlet 101 at 100 μL/min in particle separation chips CP1 to CP4. The throughput of whole blood for the three types of first specimens (whole blood with no dilution, 1.5x dilution of whole blood, and 2x dilution of whole blood) is 100 μL/min, 67 μL/min, and 50 μL/min, respectively. The sheath liquid flows from inlet 102 at 900 μL/min and from inlet 103 at 2000 μL/min. The time for pumping the first specimen to the inlets 101 to 103 is 10 minutes for any first specimen. In each particle separation chip CP1 to CP4, the second specimen is collected from the first collection section 64 (see FIG. 12) and the third specimen is collected from the multiple second collection sections 65 (see FIG. 12).

Next, the number of cells (red blood cells and white blood cells) in the three first specimens and the second specimen collected with each particle separation chip CP1 to CP4 is obtained by EQ.(2) below.

$$\text{Cell count} = \text{cell concentration (cells/mL)} \times \text{liquid volume (mL)}$$

$$\dots\text{EQ.(2)}$$

Here, the cell concentration is measured using a blood cell counter (XN series) manufactured by Sysmex Corporation or blood cell counter. The liquid volume is measured from the weight using an electronic scale.

Then, based on the number of cells (red blood cells and white blood cells) obtained by EQ.(2) above for each combination of the first specimen and particle separation chips CP1 to CP4, the red blood cell removal rate and white blood cell removal rate are then calculated by EQ.(3) and (4) below.

Red blood cell removal rate = {1 - (the number of red blood cells in the second specimen / the number of red blood cells in the first specimen)} × 100 (%)      eq.(3)

White blood cell removal rate = {1 - (the number of white blood cells in the second specimen / the number of white blood cells in the first specimen)} × 100 (%)      eq.(4)

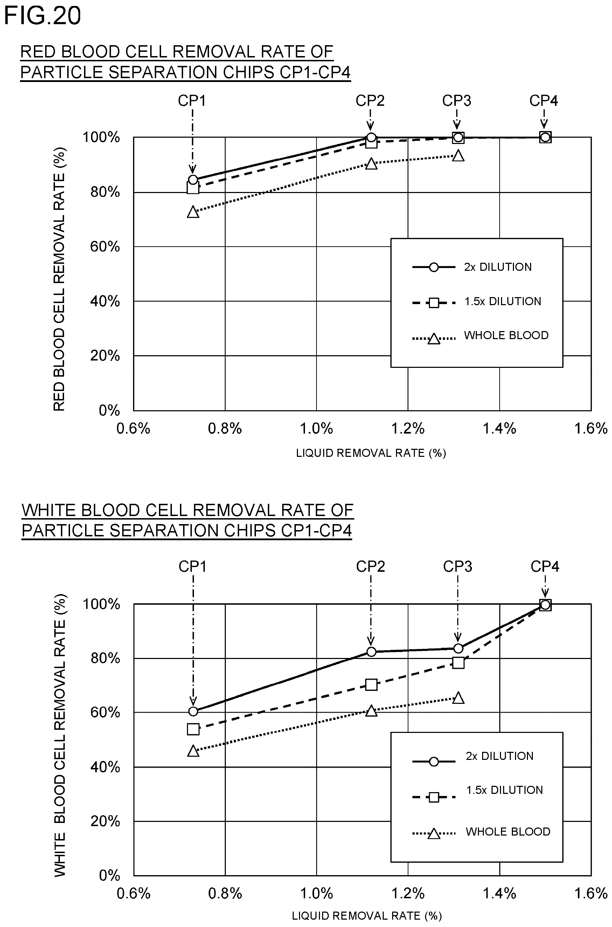

FIG. 20 shows the red blood cell removal rate and white blood cell removal rate for particle separation chips CP1 to CP4.

In the graph in FIG. 20, for convenience, the removal rates for each type of the first specimen are connected by straight lines. The liquid removal rates of particle separation chips CP1 to CP4 correspond to the liquid removal rates of chips C1 to C4 shown in FIG. 16 (0.73%, 1.12%, 1.31%, and 1.50%), respectively.

As shown in FIG. 20, high red blood cell removal rates and high white blood cell removal rates could be achieved in both cases. It was also found that the higher the liquid removal rate, the higher the height h shown in FIG. 11, the more reliably the red blood cells and white blood cells were removed. Furthermore, the higher the dilution rate, the higher the red blood cell and white blood cell removal rates. The reason for this is expected to be that the higher the dilution rate, the lower the density and viscosity of the cells in the first specimen and the easier it is to separate the red blood cells and white blood cells into the branch flow paths 200.

[Second example]

In the second example, one type of particle separation chip 1 is installed in the particle separation apparatus 2 described above, and the first specimen is flowed through the particle separation chip 1 to investigate the removal rate of red blood cells and white blood cells and the collection rate of CTCs.

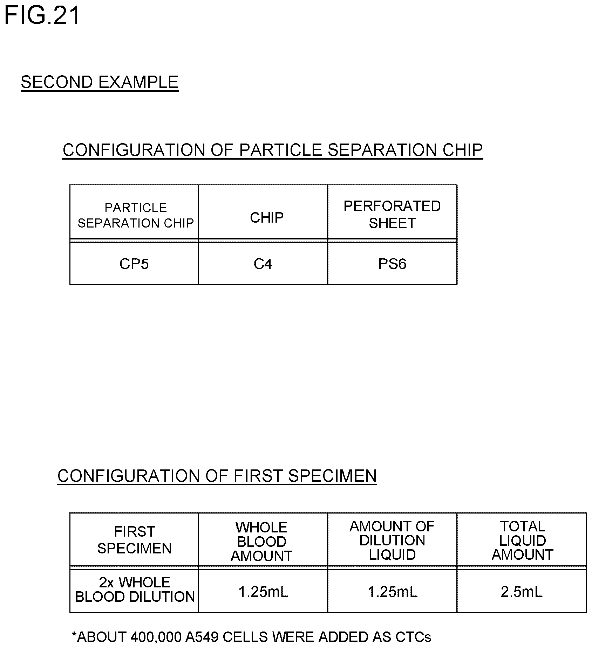

The upper part of FIG. 21 is a table showing the configuration of the particle separation chip CP5, according to the second example. The lower part of FIG. 21 is a table showing the composition of the first specimen, according to the second example.

As shown in the upper row of FIG. 21, the particle separation chip CP5 is a combination of the chip C4 shown in FIG. 16 and the perforated sheet PS6 shown in FIG. 17. As shown in the lower part of Fig. 21, the first specimen of "whole blood 2x dilution" for the second example is a 2.5 mL specimen of 1.25 mL whole blood collected from a healthy person and diluted with 1.25 mL diluent. In the second example, A549 cells obtained from the A549 cell line are added to the first specimen as CTCs. Specifically, A549 cells are stained with a predetermined reagent in advance, and about 400,000 stained A549 cells are added to the first specimen. The size of the above A549 cells is between 11 μm and 20 μm, with an average size of about 17 μm, according to measurements by the inventors.

In the second example, in the particle separation chip CP5, the entire volume (2.5 mL) of the first specimen described above is flowed separately three times at 100 μL/min from the inlet 101. The throughput of the whole blood of the first specimen is 50 μL/min at each time. The sheath liquid flows from inlet 102 at 900 μL/min and from inlet 103 at 2000 μL/min. The time for pumping the first specimen to the inlets 101 to 103 is 25 minutes at each time. The second specimen is then collected from the first collection section 64 and the third specimen from the plurality of second collection sections 65 in the particle separation chip CP5.

Next, cells (red blood cells and white blood cells) in the first and second specimens are obtained by EQ.(2) above, using the same procedure as in the first example, and the red blood cell removal rate and white blood cell removal rate are calculated by EQ.(3) and (4) above based on the number of red blood cells and white blood cells obtained.

The A549 cells in the second and third specimens collected are obtained by EQ.(2) above, and the A549 cell collection rate is calculated by EQ.(5) below based on the number of A549 cells obtained.

A549 cell collection rate = number of A549 cells in the second specimen / (the number of A549 cells in the second specimen + the number of A549 cells in the third specimen) × 100 (%)      eq.(5)

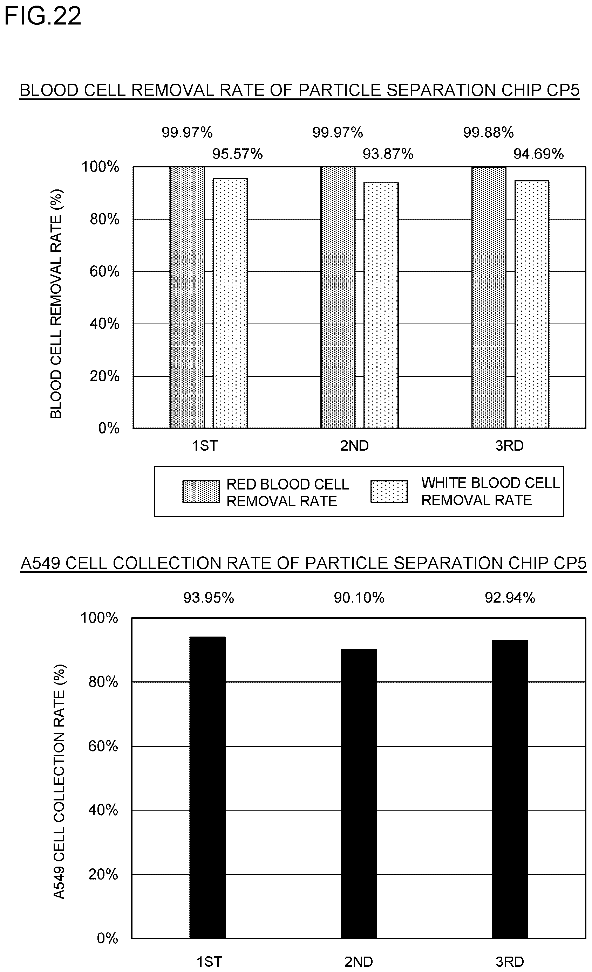

FIG. 22 shows the red blood cell removal rate, white blood cell removal rate, and A549 cell collection rate for the particle separation chip CP5.

As shown in the upper row of FIG. 22, in all cases from the first to the third time the first specimen was flowed, the red blood cell removal rate was approximately 99% or higher and the white blood cell removal rate was approximately 90% or higher, achieving a high red blood cell removal rate and a high white blood cell removal rate. As shown in the lower panel of FIG. 22, in all cases from the first to the third time the first specimen was flowed, the A549 cell collection rate was approximately 90% or higher, and a high A549 cell collection rate was achieved. These results indicate that blood cell components (red blood cells and white blood cells) and A549 cells may be properly separated from the first specimen based on the difference in particle size.

[Third example]

In the third example, six different type of particle separation chips 1 are installed in the particle separation apparatus 2 described above, and the first specimen is flowed through each particle separation chip 1 to investigate the cell removal rate, cell collection rate, weight ratio to flow paths 201, and collection and removal rates for each particle diameter.

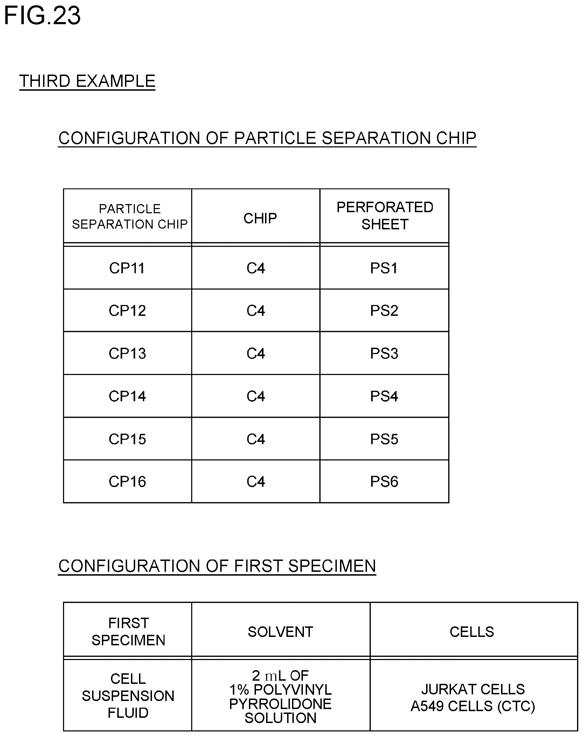

The upper part of FIG. 23 is a table showing the configuration of the six types of particle separation chips CP11 to CP16, according to the third example. The lower part of FIG. 23 is a table showing the composition of the first specimen, according to the third example.

As shown in the upper part of FIG. 23, the six types of particle separation chips CP11 to CP16 are a combination of the chip C4 shown in FIG. 16 and the perforated sheets PS1 to PS6 shown in FIG. 17. As shown in the lower row of FIG. 23, the first specimen for the third example is a cell suspension fluid. This cell suspension fluid contains 2 mL of 1% polyvinylpyrrolidone solution, about $1 \times 10^6$ Jurkat cells, and about $3 \times 10^5$ A549 cells stained with a predetermined reagent in advance. Jurkat cells correspond to blood cell components (red blood cells and white blood cells) present in normal blood, and A549 cells correspond to CTCs. The inventors then investigate the particle diameter of the Jurkat and A549 cells in the first specimen (cell suspension fluid) in advance using an imaging flow cytometer.

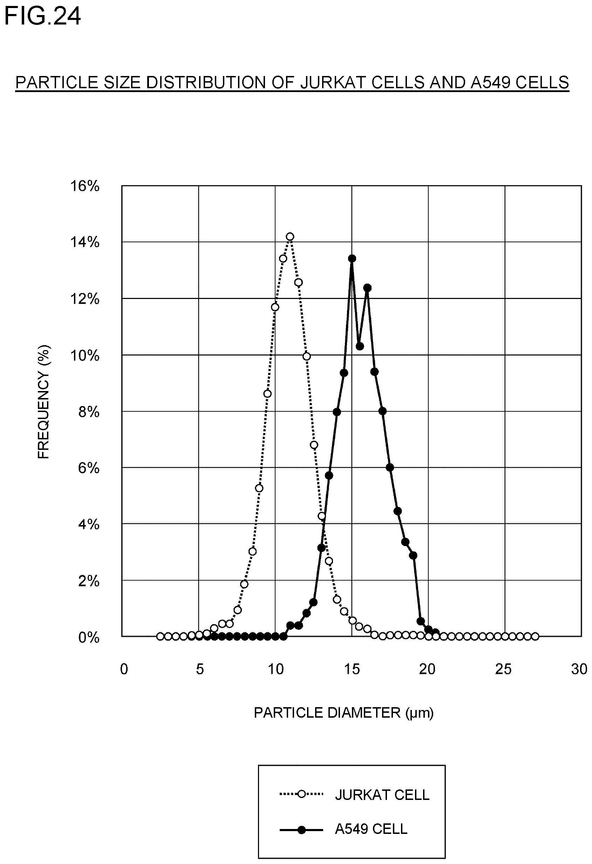

FIG. 24 shows the particle diameter distribution of Jurkat and A549 cells in the first specimen. In FIG. 24, the horizontal axis shows the particle diameter of the cells, and the vertical axis shows the frequency (%) corresponding to the particle diameter. The frequency corresponding to a given particle diameter corresponds to the probability of the presence of that given particle diameter.

In the third example, the first specimen described above flows at 110 μL/min from inlet 101 in particle separation chips CP11 to CP16. The sheath liquid flows from inlet 102 at 1400 μL/min and from inlet 103 at 1510 μL/min. The pumping time to the inlets 101 to 103 is 15 minutes. Then, in particle separation chips CP11 to CP16, a second specimen is collected from the first collection section 64 and a third specimen is collected from the plurality of second collection sections 65.

The number of cells (Jurkat cells and A549 cells) in the second and third specimens, respectively, is then calculated by the following EQ.(6).

The number of cells of a given particle diameter in a specimen = Probably of the presence of cells of a given particle diameter in the specimen $\times$ Total number of cells in the specimen      eq.(6)

In EQ.(6) above, the probability of cell presence is obtained by the frequency in FIG. 24. The total number of cells is obtained by EQ.(2) above, using the cell concentration measured by the blood cell calculator.

Then, based on the number of cells (Jurkat cells and A549 cells) per particle diameter obtained by EQ.(6) above, the collection rate at a given particle diameter is calculated by EQ.(7) below.

Collection rate of cells of a given particle diameter = {the number of cells of a given particl diameter in the second specimen / (the number of cells of a given particle diameter in the second specimen + the number of cells of a given particle diameter in the third specimen)} $\times$ 100 (%)      eq.(7)

The number of Jurkat cells and A549 cells in the second and third specimens collected is obtained by EQ.(2) above, and based on the number of Jurkat cells obtained, the removal rate of Jurkat cells is calculated by EQ.(8) below.

Jurkat cell removal rate = the number of Jurkat cells in the third specimen / (the number of Jurkat cells in the second specimen + the number of Jurkat cells in the third specimen) $\times$ 100 (%)      eq.(8)

Furthermore, the A549 cells in the second and third specimens collected are obtained by EQ.(2) above, and the A549 cell collection rate is calculated by EQ.(5) above based on the number of A549 cells obtained.

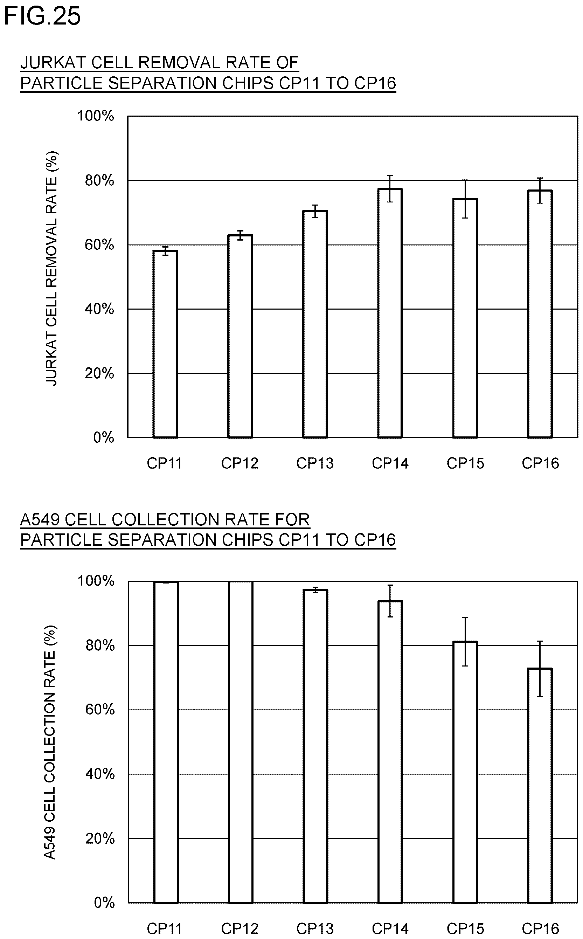

FIG. 25 shows the removal rate of Jurkat cells and the collection rate of A549 cells for particle separation chips CP11 to CP16.

As shown in the top row of FIG. 25, in all of the particle separation chips, Jurkat cells corresponding to normal blood cell components (e.g., red blood cells, white blood cells, and platelets) may be separated and removed as the third specimen. As shown in the upper row of FIG. 23, the particle separation chips CP11 to CP16 differ only in the configuration of the perforated sheet. As shown in FIG. 17, the perforated sheets PS1 to PS6 generally have larger hole diameters of 31 holes in this order. Therefore, the results in the upper row of FIG. 25 show that the larger the hole diameter of hole 31, the more Jurkat cells corresponding to normal blood cell components may be removed.

As shown in the lower part of FIG. 25, it was found that A549 cells corresponding to CTCs could be separated and collected as a second specimen in any of the particle separation tips. Since the hole diameters of the perforated sheets PS1 to PS6 generally increase in this order, the results in the lower part of FIG. 25 show that the smaller the hole diameter of hole 31, the more A549 cells corresponding to CTCs may be recovered.

< Investigation on throughput>

Next, the inventors will investigate how much the throughput may be increased by using the particle separation chip with the configuration shown in the first, second and third examples, compared to the conventional particle separation method (comparative example) described in the above non-patent document 1.

In the comparative example, 1 mL of whole blood diluted 10 times with PBS is inserted into the flow path at a flow rate of 25 μL/min, and the whole blood throughput is 2.5 μL/min. Thus, according to the comparative example, the time required for the particle separation process of 5 mL of whole blood is 2000 minutes (about 33 hours). In contrast, the particle separation chip 1 with the configuration shown in the first, second and third examples may set the throughput of whole blood (First and second examples) and cell suspension fluid (Third example) to 50 μL/min or more. Therefore, according to the embodiment, the time required for the particle separation process of 5 mL of whole blood is less than 100 minutes. Thus, according to the first, second, and third examples, the throughput may be significantly improved compared to the comparative examples.

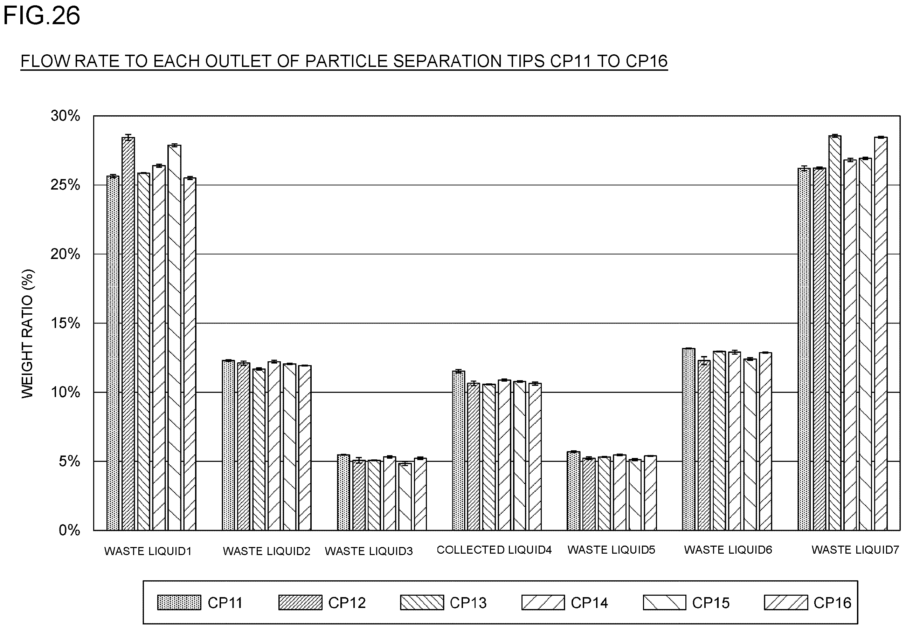

FIG. 26 shows the flow rate to each outlet of the particle separation chips CP11 to CP16.

In FIG. 26, waste liquids 1 to 3 and 5 to 7 represent the third specimens obtained from the six outlets 213 (see the lower right of FIG. 18) aligned in the Y-axis direction, respectively. In other words, waste liquid 1 is the third specimen obtained from the outlet 213 that is the lowest in the Y-axis direction among the three outlets 213 that are located lower in the Y-axis direction than the main flow path 100, waste liquid 3 is the third specimen obtained from the outlet 213 that is arranged on the uppermost in the Y-axis direction among the three outlets 213 that are located lower in the Y-axis direction than the main flow path 100, waste liquid 5 is the third specimen obtained from the outlet 213 on the lowest Y-axis side of the three outlets 213 located on the Y-axis direction above the main flow path 100, and the waste liquid 7 is the third specimen obtained from the outlet 213 arranged on the uppermost in the Y-axis direction of the three outlets 213 located on upper side in the Y-axis direction than the main flow path 100. The collected fluid 4 represents the second specimen obtained from outlet 104. The vertical axis of FIG. 26 shows the weight ratio of the specimens obtained from waste liquids 1 to 3, collected liquid 4, and waste liquids 4 to 7 for each particle separation chip CP11 to CP16.

Referring to the weight ratios of waste liquids 1 to 3 and 5 to 7, the third specimen obtained from outlet 213, which is closer to the main flow path 100 (i.e., outlet 213 connected to flow path 201, which is located downstream of the main flow path 100), has a smaller weight ratio. Although the particle separation chips CP11 to CP16 are equipped with different perforated sheets PS1 to PS6 from each other, the weight ratios of the waste liquid and collected liquids obtained from the same outlet are almost the same. This indicates that when perforated sheets PS1 to PS6 are configured as in the third example, the difference in fluid resistance due to perforated sheets is almost negligible. In other words, in this case, the flow rate of the branch flow path 200 to the flow path 201 is dominated by the fluid resistance due to the flow path 201.

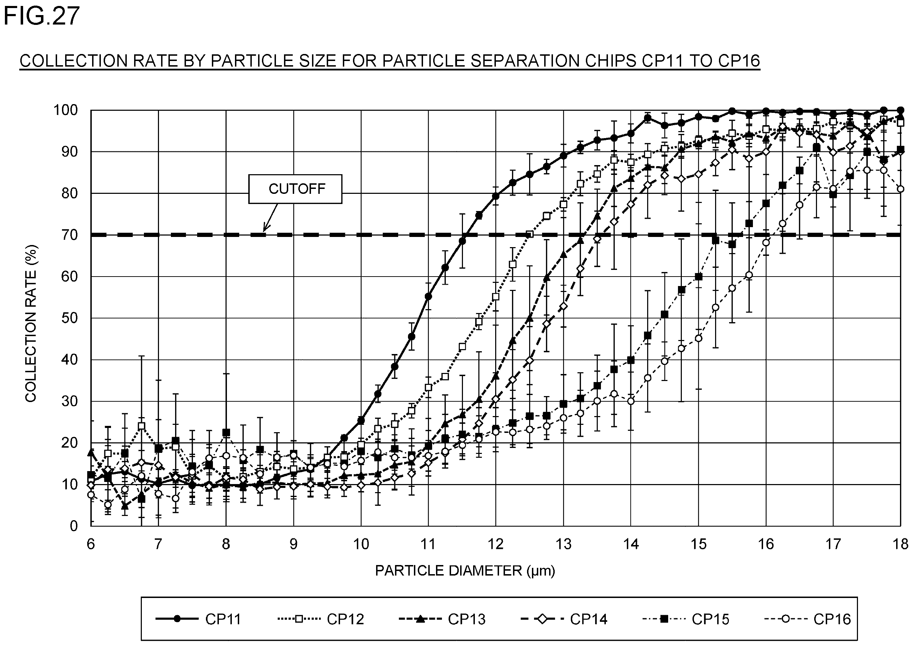

FIG. 27 shows the collection rate by particle diameter for particle separation chips CP11 to CP16.

In FIG. 27, the horizontal axis shows the particle diameter of the cells, and the vertical axis is the collection rate calculated by EQ.(7) above. For convenience, a cutoff indicating a 70% collection rate is shown as a dashed line in FIG. 27.

As mentioned above, the hole diameter of hole 31 generally increases in this order for perforated sheets PS1 to PS6. Referring to the graph in FIG. 27, in particle separation chips CP11 to CP16, the particle diameters of cells that exceed the cutoff are larger as the hole diameter increases in this order. For example, in particle separation chip CP11, the particle diameter of cells exceeding the cutoff is about 11.5 μm, and in particle separation chip CP16, the particle diameter of cells exceeding the cutoff is about 16.3 μm. This indicates that as the hole diameter of the perforated sheet increases, the collection rate changes and cells with relatively large particle diameters are primarily collected more easily, even if the configuration of the main flow path 100 and branch flow path 200 is the same.

In other words, although the liquid removal rate of the particle separation chip basically determines the particle diameter of particles that are not separated into the branch flow path 200 and collected through the main flow path 100, the percentage of particles of a given particle diameter collected through the main flow path 100 varies with the hole size of the perforated sheet.

Comparing the perforated sheet PS1 installed in the particle separation chip CP11 and the perforated sheet PS2 installed in the particle separation chip CP12, as shown in FIG. 17, the hole diameter is the same 12 μm as each other, but the perforation rate of the perforated sheet PS2 of 20.9% is smaller than that of the perforated sheet PS1 of 36.9%. In other words, the number of holes 31 in perforated sheet PS2 is less than the number of holes 31 in perforated sheet PS1. As shown in FIG. 26, the weight ratio of specimens obtained from each outlet of the particle separation chips CP11 and CP12 is almost the same. Therefore, the flow rate of the third specimen flowing from one hole 31 to the branch flow path 200 is greater for particle separation chip CP12 than for particle separation chip CP11. Thus, the higher flow rate through one hole 31 increases the force that draws the cells into hole 31. For this reason, as shown in the collection rates in FIG. 27, the collection rate of cells with relatively large particle diameters (e.g., cells with diameters between 12.5 $\mu$m and 18 $\mu$m) is considered to be smaller for particle separation chip CP12 than for particle separation chip CP11.

<Simulation of discharge into a branch flow path>

Next, the inventors investigate the flow rate (discharge rate) of the specimen flowing from the main flow path 100 to the branch flow path 200 by simulation.

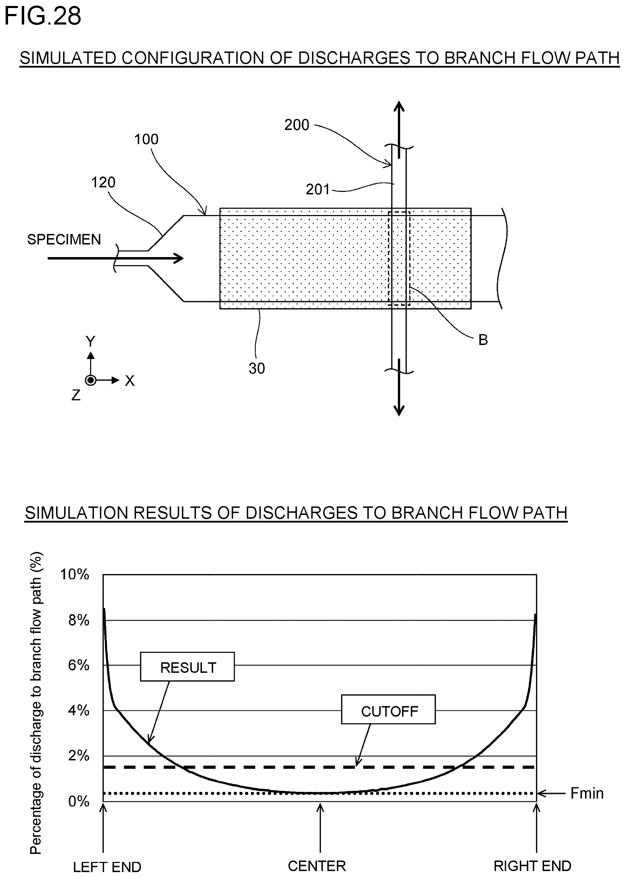

The upper part of FIG. 28 schematically shows the flow path 120 of the main flow path 100 and the flow path 201 of the branch flow path 200 for this simulation.

In this simulation, only one flow path 201 is placed in relation to flow path 120, and a perforated sheet 30 is placed at the branch B between flow path 120 and flow path 201. In this simulation, a specimen is flowed in the X-axis direction with respect to flow path 120, and the flow rate of the specimen discharged into flow path 201 through perforated sheet 30 is calculated by simulation.

The lower part of FIG. 28 is a graph showing the results of this simulation for the percentage of specimens discharged into the branch flow paths 200.

In the lower graph in FIG. 28, the horizontal axis shows the Y-axis position of the flow path 201, with the center corresponding to the center position of the flow path 120 in the Y-axis direction, and the left and right ends corresponding to one and the other end of the flow path 120 in the Y-axis direction, respectively. The vertical axis shows the percentage (%) of specimen discharged into flow path 201 of branch flow path 200.

As shown by the solid line in the lower graph in FIG. 28, the flow rate of the specimen flowing from flow path 120 to flow path 201 is greater at the left end and right end than at the center at branch B. Thus, when the height of the specimen (height h in FIG. 11) is greater at the left and right ends, the first particles (e.g., CTCs) are unintentionally discharged into the branch flow path 200 at both ends if the specimen contains first particles (e.g., CTCs). Also, because the height of the specimen is extremely low in the center, if the specimen contains second particles (e.g., red blood cells, white blood cells, and platelets), it is difficult for the second particles to be ejected into the branch flow path 200 in the center. According to the inventors' study, in order for second particles with a particle diameter of 14.5 $\mu$m or less to flow into the branch flow path 200, for example, the discharge ratio Fmin near the center must be increased to about the cutoff (1.8%).

For this reason, in the above embodiment, the first specimen is pulled near the center in the flow path 120 by the sheath liquid flowing from the inlet 103 so that the first particles in the first specimen do not flow into the branch flow path 200 and the second particles in the first specimen flow into the branch flow path 200. This allows proper separation of the first particles from the second particles. In addition, since the first specimen is prevented from flowing more at both ends of the flow path 120, the particles are separated evenly at the branch B and the second particles may be separated efficiently.

<Effectiveness of particle separation chip and particle separation apparatus>

As shown in FIG. 6, the particle separation chip 1 includes an upper substrate 10 and a lower substrate 20 (substrate) with micro flow paths 1a inside and a perforated sheet 30 with multiple holes 31. The micro flow path 1a includes a main flow path 100 and a branch flow path 200. The main flow path 100 has an inlet 101 for a first specimen containing a first particle and a second particle smaller than the first particle provided upstream and an outlet 104 (first outlet) provided downstream from which a second specimen containing mainly the first particle is taken out. The branch flow path 200 is connected to the main flow path 100 at a plurality of branches B (see FIG. 9) along the X-axis direction (flow direction of the main flow path 100) and has an outlet 213 (second outlet) from which a third specimen containing second particles is taken out on the downstream side. At the plurality of branches B, the main flow path 100 and the branch flow path 200 are connected via holes 31 in the perforated sheet 30.

According to this configuration, the main flow path 100 and the branch flow path 200 are connected through the holes 31 in the perforated sheet 30 at the multiple branches B. This enables sufficient specimen processing capacity (throughput) at product development sites and clinical sites.

As shown in FIG. 11, each of the holes 31 in the perforated sheet 30 may form a flow of specimen that moves the second particles from the main flow path 100 to the branch flow path 200. Thus, the flow of specimen of the second particle toward the branch flow path 200 may be spread in the plurality of holes 31 of the perforated sheet 30. This allows the second particles to be efficiently separated into the branch flow path 200. Thus, the flow rate of the main flow path

100 and the branch flow path 200 may be increased to efficiently increase the throughput of particle separation.

Since the width of the branch flow path 200 may be widened, particle separation may be performed without clogging even when the blood specimen contains agglomerates of cells. For example, if CTCs are assumed as the first particles, CTCs may form clusters. Even in such a case, the clusters of CTCs may be collected without clogging, allowing proper diagnosis based on the CTCs contained in the blood specimen.

In addition, whole blood may be used as the first specimen without hemolyzation of unnecessary blood cells (e.g., red blood cells) in the whole blood. This eliminates the need to prepare the first specimen using a hemolytic agent and avoids damage to the particles by the hemolytic agent. In addition, the throughput of particle separation may be increased because there is no need to dilute the whole blood excessively to ensure the particle separation process.

As shown in FIG. 6, the main flow path 100 and the branch flow path 200 are configured so that some of the first specimen introduced from the inlet 101 flows into the branch flow path 200 and the remaining specimen flows into the main flow path 100, so that the first particles are derived from the outlet 104 (first outlet) and the second particles are derived from the outlet 213 (second outlet).

According to this configuration, the separated first and second particles may be collected at outlet 104 and outlet 213, respectively. Therefore, the first and second particles may be collected smoothly.

The width in the Y-axis direction (flow path width) of the flow path 120 of the main flow path 100 is between 500 μm and 50 mm or less. For example, if the amount of whole blood in the first specimen is small, the width in the Y-axis direction (flow path width) of the flow path 120 of the main flow path 100 may be between 100 μm and 50 mm or less.

By setting the flow path width of the main flow path 100 in this manner, a high particle separation throughput may be achieved. If the width of the flow path 120 in the Y-axis direction is 100 μm or greater, the first particles of 100 μm or less may flow into the flow path 120.

As shown in FIG. 9, the branch flow path 200 includes a flow path 201 placed non-parallel to the main flow path 100 in plan view, which is connected to the main flow path 100 at the branch B.

According to this configuration, the length of the plurality of flow paths 201 of the branch flow path 200 may be smoothly adjusted in the in-plane direction of the lower substrate 20. Thus, the length of each flow path 201 may be smoothly set to a length suitable for the Hydrodynamic Filtration.

As shown in FIG. 9, the flow paths 201, which is connected to the main flow path 100 at the branch B, is placed to intersect the main flow path 100 in plan view, and the third specimen flows on both sides of the main flow path 100.

According to this configuration, the specimens of the main flow path 100 near the inlet of the flow path 201 (branch B) of the branch flow path 200 may flow into the flow path 201 without bias in the width direction of the main flow path 100. Therefore, all holes 31 of the perforated sheet 30 within the inlet of the flow path 201 may be properly functional for particle separation. Thus, the particles may be efficiently separated.

The branch flow path 200 includes between two and 15,000 flow paths 201 that are connected to the main flow path 100 at the branch B.

According to this configuration, two or more flow paths 201 may be provided to achieve at least hydraulic filtration, while providing a large number of flow paths 201 in a particle separation chip 1 that is about 150 mm on all sides.

As shown in FIGS. 4 and 5, the branch flow path 200 is located below the main flow path 100 in the state of use of the particle separation chip 1.

According to this configuration, gravity may be used to insert the third specimen containing the second particle into the branch flow path 200. Thus, the efficiency of particle separation may be smoothly increased.

The particle separation chip 1 may be formed by overlapping and joining an upper substrate 10 having a recess on its lower surface for forming a main flow path 100 and a lower substrate 20 having a recess on its upper surface for forming a branch flow path 200, via a perforated sheet 30. Thus, the particle separation chip 1 may be formed simply.

As shown in FIG. 6, the main flow path 100 has additional sheath liquid inlets 102 and 103 provided upstream of the branch B (see FIG. 9).

According to this configuration, as shown in FIGS. 7 and 8, the sheath liquid may limit the range in which the first specimen flows to a range suitable for particle separation. Therefore, particles may be efficiently separated.

As shown in FIG. 6, the sheath liquid inlet 102 is an inlet for inserting sheath liquid from the upper side of the first specimen flowing in the main flow path 100.

According to this configuration, as shown in FIG. 8, the first specimen flows into the inlet of the branch flow path 200 (branch B) with the upper part in the thickness direction restricted, thereby preventing the second particle from being missed.

As shown in FIG. 6, the sheath liquid inlet 103 is an inlet for inserting sheath liquid from both sides of the first specimen flowing through the main flow path 100.

According to this configuration, as shown in the middle and bottom rows of FIG. 8, the first specimen flows into the inlet of the branch flow path 200 (branch B) with both ends restricted in the width direction. This allows proper separation of the first particles from the second particles, as explained in the simulation in FIG. 28, and efficient separation of the second particles by separating the particles in full at the branch B.

The fluid resistance of branch flow path 200 from branch B to outlet 213 (second outlet) upstream of main flow path 100 is greater than the fluid resistance of branch flow path 200 from branch B to outlet 213 (second outlet) downstream of main flow path 100.

According to this configuration, the liquid removal rate, which is the ratio of the flow rate into the branch flow path 200 to the flow rate of the main flow path 100 at each branch B, may be made closer to each other at each branch B. Thus, a second particle of a certain size may be separated.

The branch flow path 200 includes a plurality of flow paths 201 placed non-parallel to the main flow path 100 in plan view that are connected to the main flow path 100 at a plurality of branch locations B, respectively, and relay flow paths 211 and 212 that connect the plurality of flow paths 201 and an outlet 213 (second outlet). The length of the flow path 201 that is connected to the main flow path 100 at the branch B upstream of the main flow path 100 is longer than the length of the flow path 201 that is connected to the main flow path 100 at the branch B downstream of the main flow path 100.

According to this configuration, fluid resistance at the upstream branch B of the main flow path 100 may be set higher than that at the downstream branch B of the main flow path 100 with a simple configuration.

The micro flow path 1a is formed so that the liquid removal rate, which is the ratio of the flow into the branch flow path 200 to the flow in the main flow path 100 at the branch B, is the value at which the second particles flow into the branch flow path 200 and the first particles flow into the main flow path 100.

According to this configuration, the first particles may be separated from the second particles by the Hydrodynamic Filtration.

The micro flow path 1a is formed so that the liquid removal rate, which is the ratio of the flow into the branch flow path 200 to the flow in the main flow path 100 at the branch B, is substantially the same value for each other at the multiple branches B.

According to this configuration, a second particle of a certain size may be separated at a plurality of branches B in full.

The micro flow path 1a is formed so that the liquid removal rate, which is the ratio of the flow into the branch flow path 200 to the flow in the main flow path 100 at the branch B, is greater than 0% and less than 50% at the multiple branches B.

This configuration allows the second particles below the depth of the main flow path 100 to be separated into branch flow paths.

The perforated sheets PS1 to PS6 are formed so that the opening ratio, which is the ratio of the area of hole 31 to the area of the opening at the intersection of the main flow path 100 and the branch flow path 200 (the area of the branch B), is the value at which the first particles of a predetermined size are collected from the outlet 104 (first outlet) at a predetermined collection rate.

According to this configuration, as shown in the second and third examples, the first particles of the desired size may be collected at a predetermined collection rate.

The hole diameter of the holes 31 of the perforated sheets 30, PS1 to PS7 is between 30 nm and 100 $\mu$m.

According to this configuration, the perforated sheet may be configured to inhibit the first particles from flowing into the branch flow path 200 when the diameter of the first particles is 50 nm to 100 $\mu$m.

The perforated sheets 30, PS1 to PS7 are formed so that the opening ratio is greater than 0% and less than 50% at the multiple branches.

This configuration allows the strength of the perforated sheet to be maintained.

The diameter of the first particles is between 30 nm and 100 $\mu$m.

This configuration allows the separation of first particles of various sizes, from nanoparticles such as exosomes to relatively large circulating tumor cells.

The first specimen inserted through inlet 101 is a blood specimen, the first particles are circulating tumor cells, and the second particles are white blood cells, red blood cells, and platelets.

Circulating tumor cells (CTCs) in the blood leaked from tumors into the blood have been reported to be useful as a factor in cancer diagnosis and are expected to be a non-invasive test for cancer. However, it is extremely difficult to isolate and extract CTCs from blood specimens because the presence of CTCs in blood is several to several dozen per 10 mL. However, according to the above configuration, CTCs, which are rare cells, may be efficiently separated. Moreover, since no reagents are used in the particle separation process, CTCs may be separated without damage to them.

As shown in FIG. 12, the particle separation apparatus 2 includes a particle separation chip 1, a setting part 41 on which the particle separation chip 1 is placed, the liquid pumping section 61 to 63 which insert a first specimen and sheath liquid into each of the inlet 101 of the first specimen and the inlet 102 and 103 of the sheath liquid in the particle separation chip 1 and pump the liquid in a micro flow path 1a (see FIG. 6), the first collection section 64 of the first particles connected to the outlet 104 (first outlet), and the second collection section 65 of the second particles connected to the outlet 213 (second outlet).

According to this configuration, by placing the particle separation chip 1 on the setting part 41 and driving the liquid pumping sections 61-63 to insert the first specimen and sheath liquid, the first and second particles may be smoothly collected from the first collection section 64 and second collection section 65, respectively.

] <Other variations>

In order to make the fluid resistance of branch flow path 200 from branch B to outlet 213 on the upstream side greater than that of branch flow path 200 from branch B to outlet 213 on the downstream side, the length of flow path 201 in the Y-axis direction on the upstream side was set longer than that of flow path 201 in the Y-axis direction on the downstream side. However, not limited to this, the cross-sectional area of the flow path 201 at the upstream side may be set smaller than the cross-sectional area of the flow path 201 at the downstream side.

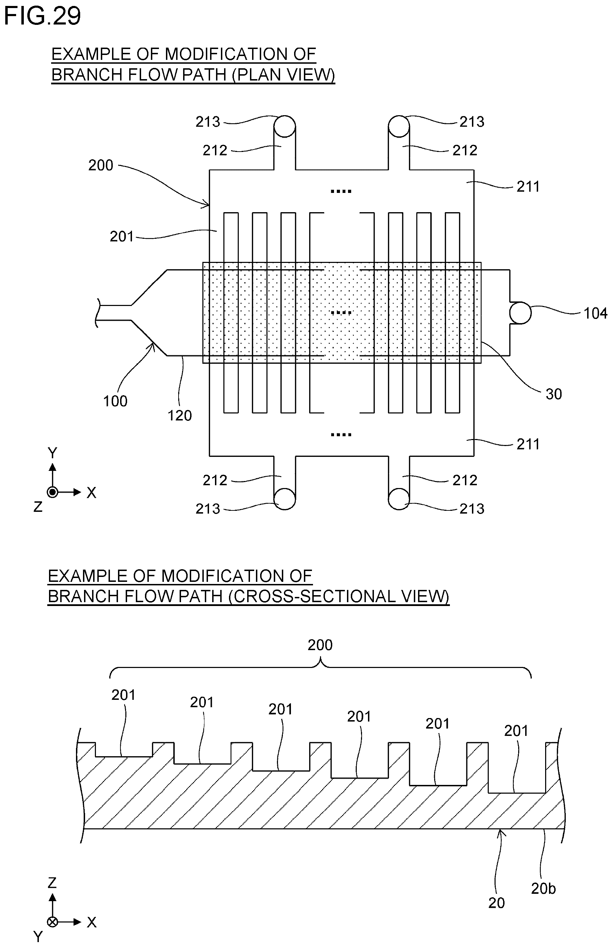

FIG. 29 schematically shows the configuration of the branch flow path 200 for this modified case. The upper part of FIG. 29 is a plan view showing the configuration in the vicinity of the branch flow path 200, and the lower part of FIG. 29 is a cross-sectional view showing the configuration of the recess corresponding to the flow path 201 formed in the lower substrate 20.

As shown in the upper row of FIG. 29, the lengths of the plurality of flow paths 201 in the Y-axis direction are the same as each other. As shown in the lower row of FIG. 29, the widths of the plurality of flow path 201 in the X-axis direction are the same as each other, and the height of the flow path 201 in the Z-axis direction at the upstream side is set smaller than the height of the flow path 201 in the Z-axis direction at the downstream side. As a result, the cross-sectional area of the flow path 201 at the upstream side is set smaller than that of the flow path 201 at the downstream side. In this configuration, the fluid resistance at the branch B on the upstream side of the main flow path 100 may be set larger than the fluid resistance at the branch B on the downstream side of the main flow path 100 with a simple configuration.

In setting the cross-sectional area, both the width in the X-axis direction and the height in the Z-axis direction of the flow paths 201 may be adjusted. In setting the fluid resistance, both the length in the Y-axis direction and the cross-sectional area of the plurality of flow paths 201 may be adjusted.

The plurality of flow paths 201 were formed extending on both sides of the flow path 120 of the main flow path 100, but may be formed extending on only one side of the flow path 120.

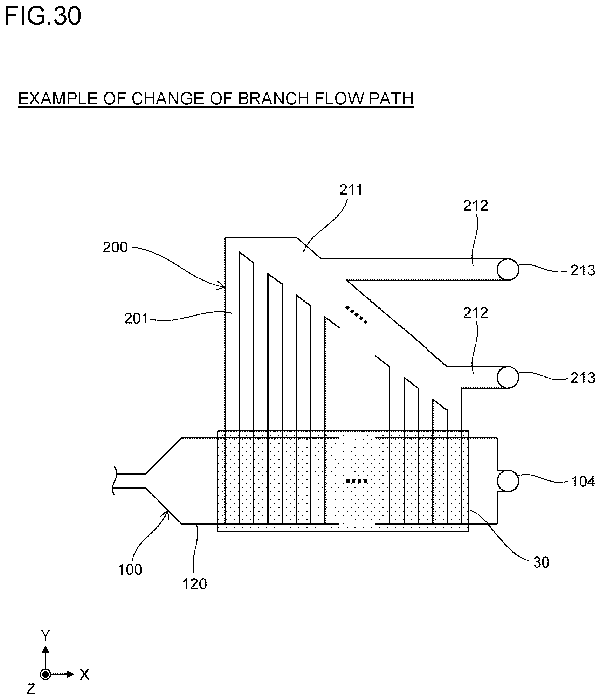

FIG. 30 is a plan view of the vicinity of the branch flow path 200 for a modified example of this case. In this modified example, in plan view, one end of the plurality of flow paths 201 coincides with one end of the flow path 120 in the Y-axis direction.

In this case, the second particles separated at the branch B move in one direction along the flow paths 201. At the opposite Y-axis end of the flow path 201, it is difficult for the specimen to flow in that one direction in the flow path 201. Therefore, it is difficult for the separation function of the second particle to be performed at the branch B, resulting in a decrease in the separation efficiency of the second particle. In contrast, when the flow path 201 extends on both sides of the flow path 120, as in the above embodiment, the separation function at the branch B is properly demonstrated and the separation efficiency of the second particle is increased.

As shown in FIG. 1, one inlet 103 was placed on the central axis CA to allow sheath liquid to be injected into the flow path 111 from the sides of the flow path 111, but not only this, two inlets 103 may be placed on both sides of the Y-axis direction apart with respect to the central axis CA. In this case, the two flow paths leading to the two inlets 103 respectively are connected to both sides of the flow path 111 in the Y-axis direction. This allows sheath liquid to be inserted into the flow path 111 from the sides of the flow path 111, as in the above embodiments and examples. However, in this case, the configuration and control of the particle separation apparatus 2 becomes complicated because two liquid pumping sections 63 are needed to insert the sheath liquid into each of the two inlets 103, and the pumping volumes of the two liquid pumping sections 63 must be equal to each other. Therefore, as described above, it is preferred that only one inlet 103 be provided along the central axis CA.

One perforated sheet 30 was placed to overlap all branches B. However, this is not limited to this, and multiple perforated sheets 30 may be placed to overlap one or more branches B, respectively.

The plurality of flow paths 201 were formed in plan view, extending vertically to the flow path 120 of the main flow path 100, but may be placed in an oblique direction to the flow path 120. In this case, the length of the plurality of flow paths 201 may still be smoothly adjusted in the in-plane direction of the lower substrate 20.

In the above embodiment, as shown in FIG. 2, one relay flow path 211 was provided at each of the two ends of the plurality of flow paths 201 in the Y-axis direction, and in the above examples, as shown in FIG. 18, two or three relay flow paths 211 were provided at each of the two ends of the plurality of flow paths 201 in the Y-axis direction. Without limitation, four or more relay flow paths 211 may be provided at both ends of the relay flow paths 211 in the Y-axis direction, respectively.

In the above embodiment, as shown in FIG. 2, one relay flow path 211 was connected to one end of all flow paths 201 in the Y-axis direction and two outlets 213 were connected to one relay flow path 211. Not limited to this, one or more than three outlets 213 may be connected to one relay flow path 211. In the above examples, one outlet 213 was connected to one relay flow path 211, as shown in FIG. 18. Not limited to this, multiple outlets 213 may be connected to one relay flow path 211, or one outlet 213 may be connected to multiple relay flow paths 211.

In the above embodiment, as shown in FIG. 1, one outlet 104 is located downstream of the main flow path 100, but multiple outlets 104 may be located.

In the above examples, the first particle was a CTC and the second particle was a red blood cell, white blood cell, and platelet, but the combination of the first and second particles is not limited to this. For example, the first particle could be an extracellular vesicle such as an exosome and the second particle could be a protein or debris smaller than the extracellular vesicle.

The first particle was the particle to be acquired and the second particle was the particle to be removed, however, not limited to this, the first particle may be a particle to be removed and the second particle may be a particle to be acquired. In this case, the first particle may still be separated from the second particle and the second particle may be acquired at a high throughput based on the size of the particles.

The first specimen inserted from inlet 101 was, but is not limited to, a blood specimen. As long as there are two types of particles of different sizes in the first specimen and these two types of particles may be separated by the particle separation chip 1, the first specimen may be a body fluid other than blood (cerebrospinal fluid, ascites, pleural fluid, synovial fluid, peritoneal dialysis drainage fluid, etc.), a specimen prepared from a body fluid, urine or a specimen prepared from urine.

The embodiments of the invention may be modified in various ways as appropriate within the scope of the technical ideas indicated in the claims.

As a supplementary note, a sample measuring apparatus, an information reading apparatus, and an information reading method are summarized.

The present disclosure includes the following items 1-25.

Item 1: A particle separation chip for separating particles contained in a specimen based on particle size, comprising:

a substrate comprising a micro flow path inside of the substrate; and
a perforated sheet comprising holes, wherein
the micro flow path comprising:

a main flow path comprises:

an inlet arranged at upstream side, into which a specimen comprising a first particle, and a second particle that is smaller than the first particle is supplied; and
a first outlet arranged at downstream side, from which a specimen comprising the first particle is discharged; and

a branch flow path connected to the main flow path at branches along a flow direction of the main flow path, the branch flow path comprising a second outlet from which a specimen comprising the second particle is discharged at downstream side, and wherein

the main flow path and the branch flow path are connected via the holes of the perforated sheet at the branches.

Item 2: In the particle separation chip according to item 1,
the main flow path and the branch flow path are configured such that a partial specimen supplied from the inlet flows into the branch flow path and a remaining specimen flows into the main flow path, so that the first particle is discharged from the first outlet and the second particle is discharged from the second outlet.
Item 3: In the particle separation chip according to item 1,
a flow path width of the main flow path is greater than or equal to 100 $\mu$m and less than or equal to 50 mm.
Item 4: In the particle separation chip according to item 1,
a flow path width of the main flow path is greater than or equal to 500 $\mu$m and less than or equal to 50 mm.
Item 5: In the particle separation chip according to item 1,
the branch flow path comprises flow paths arranged non-parallel to the main flow path in plan view, each of the flow paths connecting to the main flow path at each of the branches.
Item 6: In the particle separation chip according to item 5,
the flows path connecting with the main flow path are arranged to intersect the main flow path in plan view at each of the branches, and the specimen comprising the second particle flows to both sides of the main flow path.
Item 7: In the particle separation chip,
the branch flow path comprises the greater than or equal to 2 and less than or equal to 15,000 flow paths that are connected to the main flow path at each of the branches.

Item 8: In the particle separation chip according to item 1,
the branch flow path is arranged below the main flow path when the particle separation chip is in use.

Item 9: In the particle separation chip according to item 1,
the main flow path further comprises a sheath liquid inlet arranged at the upstream side from the branches.

Item 10: In the particle separation chip according to item 9,
the sheath liquid inlet supplies sheath liquid from upper side of the specimen flowing in the main flow path.

Item 11: In the particle separation chip according to item 9,
the sheath liquid inlet supplies sheath liquid from both sides of the specimen flowing in the main flow path.

Item 12: In the particle separation chip according to item 1,
a fluid resistance from one of the branches of the upstream side of the main flow to the second outlet is greater than a fluid resistance from another of the branches of the downstream side of the main flow to the second outlet.

Item 13: In the particle separation chip according to item 1,

the branch flow path comprises:

flow paths arranged non-parallel to the main flow path in plan view, each of the flow paths connecting to the main flow path at each of the branches; and
a relay flow path connecting the flow paths to the second outlet, wherein

a length of one of the flow paths that is connected to the main flow path at one of the branches of the upstream side of the main flow path is longer than a length of another of the flow paths that is connected to the main flow path at another of the branches of the downstream side of the main flow path.

Item 14: In the particle separation chip according to item 1,

the branch flow path comprises:

flow paths arranged non-parallel to the main flow path in plan view, each of the flow paths connecting to the main flow path at each of the branches; and
a relay flow path connecting the flow paths to the second outlet, wherein

a cross-sectional area of one of the flow paths that is connected to the main flow path at one of the branches of the upstream side of the main flow path is smaller than a cross-sectional area of another of the flow paths that is connected to the main flow path at another of the branches of the downstream side of the main flow path.

Item 15: In the particle separation chip according to item 1,
the micro flow path has a liquid removal rate such that the second particle flow into the branch flow path and the first particle flow into the main flow path, the liquid removal rate is a ratio of a flow rate into the branch flow path at one of branches.

Item 16: In the particle separation chip according to item 1,
the micro flow path has a liquid removal rate that is substantially the same ratio at each of the branches, the liquid removal rate is a ratio of a flow rate into the branch flow path at one of branches.

Item 17: In the particle separation chip according to item 1,
the micro flow path has a liquid removal rate that is greater than 0% and less than or equal to 50% at each of the branches, the liquid removal rate is a ratio of a flow into the branch flow path at one of branches.

Item 18: In the particle separation chip according to item 1,
the perforated sheet has an opening ratio such that the first particle of a predetermined size is collected from the first outlet at a predetermined collection rate, the opening ratio is a ratio of an area of the holes in the perforated sheet to the area of openings in an intersection surface of the main flow path and the branch flow path.

Item 19: In the particle separation chip according to item 1,
a diameter of the holes in the perforated sheet is greater than or equal to 30 nm and less than or equal to 100 $\mu$m.

Item 20: In the particle separation chip, according to item 1
the perforated sheet has an opening ratio that is greater than 0% and less than or equal to 50% at the branches, the opening ratio is a ratio of an area of holes in the perforated sheet to an area of an opening in an intersection surface of the main flow path and the branch flow path.

Item 21: In the particle separation chip according to item 1,
a diameter of the first particle is greater than or equal to 30 nm and less than or equal to 100 $\mu$m.

Item 22: In the particle separation chip according to item 1,

    the specimen supplied from the inlet comprises a blood specimen,
    the first particle comprises a circulating tumor cell, and
    the second particle comprises a white blood cell, a red blood cell, and a platelet.

Item 23: A particle separation apparatus comprising:

    the particle separation chip according to one of items 1 to 22;
    a setting part on which the particle separation chip is placed;
    a liquid pumping section that supplies the specimen and sheath liquid into each of the inlet of the specimen of the main flow path and an inlet of the sheath liquid of the main flow path in the particle separation chip and pumps liquid in the micro flow path;
    a first collection section for the first particle that is connected to the first outlet; and
    a second collection section for the second particle connected to the second outlet.

DESCRIPTION OF SIGNS

    1 Particle separation chip
    1a Micro flow paths
    2 Particle separation apparatus
    10 Upper substrate (board)
    20 Lower substrate (board)
    30 Perforated sheet
    31 Holes
    41 Setting part
    61 to 63 Liquid pumping section
    64 First collection section
    65 Second collection section
    100 Main flow path
    101 Inlet
    102, 103 Inlet (sheath liquid inlet)
    104 Outlet (first outlet)
    200 Branch flow path
    201 Flow path
    211, 212 Relay flow path
    213 Outlet (second outlet)
    B Branch
    CP1 to CP5, CP11 to CP16 Particle Separation Chips
    SP1 to SP7 Perforated sheet

**Claims**

1.    A particle separation chip for separating particles contained in a specimen based on particle size, comprising:

    a substrate comprising a micro flow path inside of the substrate; and
    a perforated sheet comprising holes, wherein
    the micro flow path comprises:

        a main flow path comprising:

            an inlet arranged at upstream side, into which a specimen comprising a first particle, and a second particle that is smaller than the first particle is supplied; and
            a first outlet arranged at downstream side, from which a specimen comprising the first particle is discharged; and

a branch flow path connected to the main flow path at branches along a flow direction of the main flow path, the branch flow path comprising a second outlet from which a specimen comprising the second particle is discharged at downstream side, and wherein

the main flow path and the branch flow path are connected via the holes of the perforated sheet at the branches.

2. The particle separation chip according to claim 1, wherein
the main flow path and the branch flow path are configured such that a partial specimen supplied from the inlet flows into the branch flow path and a remaining specimen flows into the main flow path, so that the first particle is discharged from the first outlet and the second particle is discharged from the second outlet.

3. The particle separation chip according to claim 1, wherein
a flow path width of the main flow path is greater than or equal to 100 $\mu$m and less than or equal to 50 mm, and preferably greater than or equal to 500 $\mu$m and less than or equal to 50 mm.

4. The particle separation chip according to claim 3, wherein
the branch flow path comprises flow paths arranged non-parallel to the main flow path in plan view, each of the flow paths connecting to the main flow path at each of the branches.

5. The particle separation chip according to claim 4, wherein
the flow paths connecting with the main flow path are arranged to intersect the main flow path in plan view at each of the branches, and the specimen comprising the second particle flows to both sides of the main flow path.

6. The particle separation chip according to claim 1, wherein
the branch flow path comprises the greater than or equal to 2 and less than or equal to 15,000 flow paths that are connected to the main flow path at each of the branches.

7. The particle separation chip according to claim 1, wherein
the branch flow path is arranged below the main flow path when the particle separation chip is in use.

8. The particle separation chip according to claim 1, wherein

the main flow path further comprises a sheath liquid inlet arranged at the upstream side from the branches, and preferably
the sheath liquid inlet supplies sheath liquid from upper side of the specimen flowing in the main flow path; or
the sheath liquid inlet supplies sheath liquid from both sides of the specimen flowing in the main flow path.

9. The particle separation chip according to claim 1, wherein
a fluid resistance from one of the branches of the upstream side of the main flow path to the second outlet is greater than a fluid resistance from another of the branches of the downstream side of the main flow path to the second outlet.

10. The particle separation chip according to claim 1, wherein
the branch flow path comprises:

flow paths arranged non-parallel to the main flow path in plan view, each of the flow paths connecting to the main flow path at each of the branches; and
a relay flow path connecting the flow paths to the second outlet,
wherein
a length of one of the flow paths that is connected to the main flow path at one of the branches of the upstream side of the main flow path is longer than a length of another of the flow paths that is connected to the main flow path at another of the branches of the downstream side of the main flow path, or
wherein
a cross-sectional area of one of the flow paths that is connected to the main flow path at one of the branches of the upstream side of the main flow path is smaller than a cross-sectional area of another of the flow paths that is connected to the main flow path at another of the branches of the downstream side of the main flow path.

11. The particle separation chip according to claim 1, wherein
the micro flow path has a liquid removal rate such that the second particle flow into the branch flow path and the first particle flow into the main flow path, the liquid removal rate is a ratio of a flow rate into the branch flow path at one of branches, preferably the liquid removal rate that is greater than 0% and less than or equal to 50% at each of the branches.

12. The particle separation chip according to claim 1, wherein
the micro flow path has a liquid removal rate that is substantially the same ratio at each of the branches, the liquid removal rate is a ratio of a flow rate into the branch flow path at one of branches.

13. The particle separation chip according to claim 1, wherein
the perforated sheet has an opening ratio such that the first particle of a predetermined size is collected from the first outlet at a predetermined collection rate, the opening ratio is a ratio of an area of the holes in the perforated sheet to an area of an opening in an intersection surface of the main flow path and the branch flow path.

14. The particle separation chip according to claim 1, wherein
a diameter of the holes in the perforated sheet is greater than or equal to 30 nm and less than or equal to 100 μm.

15. The particle separation chip according to claim 1, wherein
the perforated sheet has an opening ratio that is greater than 0% and less than or equal to 50% at the branches, the opening ratio is a ratio of an area of holes in the perforated sheet to an area of an opening in an intersection surface of the main flow path and the branch flow path.

16. A particle separation apparatus comprising:

the particle separation chip according to one of claims 1 to 15;
a setting part on which the particle separation chip is placed;
a liquid pumping section that supplies the specimen and sheath liquid into each of the inlet of the specimen of the main flow path and an inlet of the sheath liquid of the main flow path in the particle separation chip and pumps liquid in the micro flow path;
a first collection section for the first particle that is connected to the first outlet; and
a second collection section for the second particle connected to the second outlet.

FIG.1

EP 4 484 009 A1

FIG.2

# FIG.3

ENLARGED VIEW

FIG.4

FIG.5

FIG.6

EP 4 484 009 A1

FIG.7

# FIG. 8

## C21-C22 CROSS SECTION

111

SHEATH LIQUID →

FIRST SPECIMEN →

Z
Y ← ⊗
X

## C31-C32 CROSS SECTION

111

SHEATH LIQUID →

FIRST SPECIMEN

Z
Y ← ⊗
X

## C41-C42 CROSS SECTION

120

SHEATH LIQUID          FIRST SPECIMEN

Z
Y ← ⊗
X

FIG. 9

# FIG.10

## C11-C12 CROSS SECTION

FIRST SPECIMEN

SHEATH LIQUID

SECOND SPECIMEN

101

102

100

120

10

10b

104

32

EP 4 484 009 A1

201

200

30

31

20

20b

SECOND PARTICLE

FIRST PARTICLE

THIRD SPECIMEN

Z

X

Y

# FIG.11

SHEATH LIQUID

Qm

10
10b
100
120

B

30

31

h

FIRST SPECIMEN

FIRST PARTICLE

SECOND PARTICLE

200

201

Qs

20
20b

Z
Y X

# FIG.12

<u>2</u>

SHEATH LIQUID — P — 62

FIRST SPECIMEN — P — 61

SHEATH LIQUID — P — 63

64 SECOND SPECIMEN

THIRD SPECIMEN

65

# FIG.13

5

BLOOD SPECIMEN

CELL DETECTION SYSTEM

2

PARTICLE SEPARATION APPARATUS

| CONTROLLER | 2a |

| ELEVATING MECHANISM | 2b |

| LIQUID PUMPING SECTION | 61 62 63 |

STAIN CONCENTRATION DEVICE — 3

IMAGING FLOW CYTOMETER — 4

# FIG.14

<u>MAIN AND BRANCH FLOW PATH SIZES</u>

EP 4 484 009 A1

FIG.15

EP 4 484 009 A1

FIG.16

CHIP CONFIGURATION

| CHIP | MAIN FLOW PATH LENGTH Lmain (mm) | BRANCH FLOW PATH | | | | | LIQUID REMOVAL RATE(%) |
|---|---|---|---|---|---|---|---|
| | | NUMBER OF FLOW PATHS N | LENGTH L1(mm) | LENGTH Ln (mm) | WIDTH w (mm) | SPACING v (mm) | |
| C1 | 28.52 | 222 | 31.20 | 8.56 | 0.07 | 0.08 | 0.73 |
| C2 | 23.45 | 144 | 36.39 | 11.59 | 0.1 | 0.05 | 1.12 |
| C3 | 28.40 | 177 | 36.16 | 9.95 | 0.1 | 0.05 | 1.31 |
| C4 | 24.80 | 153 | 28.29 | 8.64 | 0.1 | 0.05 | 1.50 |

# FIG.17

PERFORATED SHEET CONFIGURATION

| PERFORATED SHEET | PORE DIAMETER φ (μm) | PITCH p (μm) | PERCENTAGE OF OPEN PORES R(%) |
|---|---|---|---|
| PS1 | 12 | 19 | 36.9 |
| PS2 | 12 | 25 | 20.9 |
| PS3 | 13 | 25 | 24.5 |
| PS4 | 14 | 25 | 28.4 |
| PS5 | 14.5 | 25 | 30.5 |
| PS6 | 16 | 25 | 36.9 |
| PS7 | 20 | 32 | 35.1 |

# FIG.18

CHIP C1

CHIP C2

CHIP C3

CHIP C4

# FIG.19

FIRST EXAMPLE

CONFIGURATION OF PARTICLE SEPARATION CHIP

| PARTICLE SEPARATION CHIP | CHIP | PERFORATED SHEET |
|---|---|---|
| CP1 | C1 | PS7 |
| CP2 | C2 | PS7 |
| CP3 | C3 | PS7 |
| CP4 | C4 | PS7 |

CONFIGURATION OF FIRST SPECIMEN

| FIRST SPECIMEN | WHOLE BLOOD AMOUNT | AMOUNT OF DILUTION LIQUID | TOTAL LIQUID AMOUNT |
|---|---|---|---|
| NO WHOLE BLOOD DILUTION | 5mL | NONE | 5mL |
| 1.5x WHOLE BLOOD DILUTION | 3.33mL | 1.67mL | 5mL |
| 2x WHOLE BLOOD DILUTION | 2.5mL | 2.5mL | 5mL |

# FIG.20

RED BLOOD CELL REMOVAL RATE OF
PARTICLE SEPARATION CHIPS CP1-CP4

WHITE BLOOD CELL REMOVAL RATE OF
PARTICLE SEPARATION CHIPS CP1-CP4

# FIG.21

SECOND EXAMPLE

### CONFIGURATION OF PARTICLE SEPARATION CHIP

| PARTICLE SEPARATION CHIP | CHIP | PERFORATED SHEET |
|---|---|---|
| CP5 | C4 | PS6 |

### CONFIGURATION OF FIRST SPECIMEN

| FIRST SPECIMEN | WHOLE BLOOD AMOUNT | AMOUNT OF DILUTION LIQUID | TOTAL LIQUID AMOUNT |
|---|---|---|---|
| 2x WHOLE BLOOD DILUTION | 1.25mL | 1.25mL | 2.5mL |

*ABOUT 400,000 A549 CELLS WERE ADDED AS CTCs

# FIG.22

BLOOD CELL REMOVAL RATE OF PARTICLE SEPARATION CHIP CP5

A549 CELL COLLECTION RATE OF PARTICLE SEPARATION CHIP CP5

# FIG.23

THIRD EXAMPLE

## CONFIGURATION OF PARTICLE SEPARATION CHIP

| PARTICLE SEPARATION CHIP | CHIP | PERFORATED SHEET |
|---|---|---|
| CP11 | C4 | PS1 |
| CP12 | C4 | PS2 |
| CP13 | C4 | PS3 |
| CP14 | C4 | PS4 |
| CP15 | C4 | PS5 |
| CP16 | C4 | PS6 |

## CONFIGURATION OF FIRST SPECIMEN

| FIRST SPECIMEN | SOLVENT | CELLS |
|---|---|---|
| CELL SUSPENSION FLUID | 2 mL OF 1% POLYVINYL PYRROLIDONE SOLUTION | JURKAT CELLS A549 CELLS (CTC) |

# FIG.24

## PARTICLE SIZE DISTRIBUTION OF JURKAT CELLS AND A549 CELLS

# FIG.25

JURKAT CELL REMOVAL RATE OF
PARTICLE SEPARATION CHIPS CP11 TO CP16

A549 CELL COLLECTION RATE FOR
PARTICLE SEPARATION CHIPS CP11 TO CP16

# FIG.26

FLOW RATE TO EACH OUTLET OF PARTICLE SEPARATION TIPS CP11 TO CP16

FIG.27

COLLECTION RATE BY PARTICLE SIZE FOR PARTICLE SEPARATION CHIPS CP11 TO CP16

CUTOFF

COLLECTION RATE (%)

PARTICLE DIAMETER (µm)

— CP11   ·····□····· CP12   ---▲--- CP13   --◇-- CP14   ······■······ CP15   ---○---- CP16

# FIG.28

## SIMULATED CONFIGURATION OF DISCHARGES TO BRANCH FLOW PATH

## SIMULATION RESULTS OF DISCHARGES TO BRANCH FLOW PATH

# FIG.29

EXAMPLE OF MODIFICATION OF
BRANCH FLOW PATH (PLAN VIEW)

EXAMPLE OF MODIFICATION OF
BRANCH FLOW PATH (CROSS-SECTIONAL VIEW)

FIG.30

EXAMPLE OF CHANGE OF BRANCH FLOW PATH

Europäisches
Patentamt

European
Patent Office

Office européen
des brevets

# EUROPEAN SEARCH REPORT

**Application Number**

EP 24 18 3605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI XIANG ET AL: "Continuous-flow microfluidic blood cell sorting for unprocessed whole blood using surface-micromachined microfiltration membranes", LAB ON A CHIP, vol. 14, no. 14, 6 May 2014 (2014-05-06), - 6 May 2014 (2014-05-06), pages 2565-2575, XP055813480, UK ISSN: 1473-0197, DOI: 10.1039/C4LC00350K Retrieved from the Internet: URL:https://pubs.rsc.org/en/content/articl epdf/2014/lc/c4lc00350k> [retrieved on 2024-11-13] * the whole document * | 1-3,7-9, 11-16 | INV. B01L3/00 B01L9/00 |
| X | WO 2018/214623 A1 (UNIV SOUTH SCIENCE & TECHNOLOGY CHINA [CN]) 29 November 2018 (2018-11-29) * claims 1-6; figures 1,2 * | 1,2,7,9, 11-16 | |
| X | CN 106 148 187 A (NAT CT NANOSCIENCE & TECHNOLOGY CHINA ET AL.) 23 November 2016 (2016-11-23) * the whole document * | 1,4-7, 9-13,15, 16 | **TECHNICAL FIELDS SEARCHED** (IPC) B01L |

The present search report has been drawn up for all claims

| Place of search | Date of completion of the search | Examiner |
|---|---|---|
| The Hague | 14 November 2024 | Vlassis, Maria |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3605

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2024

| Patent document cited in search report | Publication date | Patent family member(s) | Publication date |
|---|---|---|---|
| WO 2018214623 A1 | 29-11-2018 | CN 107099450 A<br>US 2021170409 A1<br>WO 2018214623 A1 | 29-08-2017<br>10-06-2021<br>29-11-2018 |
| CN 106148187 A | 23-11-2016 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIYUKI MATSUDA.** Classification of Blood Cells Using Hydrodynamic Filtration. *Journal of Electrical Engineering E, Institute of Electrical Engineers,* 2008, vol. 128 (10), 396-401